# EUROPÄISCHE PATENTSCHRIFT

(11) **EP 3 501 897 B1**
(45) Veröffentlichungstag und Bekanntmachung des Hinweises auf die Patenterteilung: **30.12.2020**
(21) Anmeldenummer: 18208430.1
(22) Anmeldetag: 27.11.2018
(51) Int. Cl.: B60R 1/00

(54) **SICHTSYSTEM ZUR ERFASSUNG EINER FAHRZEUGUMGEBUNG**
VISION SYSTEM FOR DETECTING THE SURROUNDINGS OF A VEHICLE
SYSTÈME DE VISUALISATION PERMETTANT D'APPREHENDER L'ENVIRONNEMENT D'UN VÉHICULE

(30) Priorität: 19.12.2017 DE 102017130566
(43) Veröffentlichungstag der Anmeldung: 26.06.2019
(73) Patentinhaber: MEKRA Lang GmbH & Co. KG, 91465 Ergersheim (DE)
(72) Erfinder: Lang, Werner, 91465 Ergersheim (DE); Redlingshöfer, Andreas, 90619 Trautskirchen (DE); Enz, Andreas, 91593 Burgbernheim (DE)
(74) Vertreter: Kramer Barske Schmidtchen Patentanwälte PartG mbB

(56) Entgegenhaltungen:
- EP-A1- 2 623 374
- DE-A1-102010 032 411
- DE-A1-102013 214 368
- DE-A1-102013 214 369
- DE-A1-102014 006 153
- DE-A1-102014 018 040
- DE-A1-102015 218 033

## Beschreibung

Die Erfindung betrifft ein Sichtsystem zur Erfassung einer Umgebung um ein Fahrzeug herum, insbesondere ein Nutzfahrzeug mit Auflieger, Trailer, Anhänger oder einem anderen zur Fahrerkabine schwenkbaren, sich nach hinten erstreckenden Abschnitt.

Aus dem Stand der Technik sind Spiegel bekannt, die an der Außenseite einer Fahrerkabine bzw. einer Zugmaschine anbringbar sind bzw. angebracht sind. Bei Spiegeln kann der Fahrer bei Ausscheren des Anhängers, wie beispielsweise bei einer Kurvenfahrt oder eines Abbiegevorgangs, durch entsprechende Kopfbewegung die Fahrzeugumgebung um den Anhänger herum (wenigstens teilweise) beobachten.

Ein Anhänger im Sinne der vorliegenden Lehre umfasst Anhänger, die mittels Anhängerkupplung an ein Fahrzeug (Zugmaschine bzw. Zugeinheit) gekoppelt werden, beispielsweise Auflieger (sogenannte Trailer), die auf den hinteren, abgesenkten Bereich einer Zugmaschine aufgelegt und damit schwenkbar, um zumindest eine vertikale Achse, verbunden werden. In allgemeinen Worten ist ein Anhänger ein sich nach hinten erstreckender Abschnitt, der sich rückwärtig zur Fahrerkabine eines Fahrzeugs befindet und ein seitlich relativ zur Fahrerkabine beweglicher (ausschwenkbarer) Fahrzeugteil ist, der bei einer Kurvenfahrt relativ zur Fahrerkabine um eine vertikale Achse schwenkt. Auch Knicklenker oder Gliederzüge sind Anhänger im Sinne der Erfindung.

In jüngster Zeit werden Fahrzeugspiegel mehr und mehr durch Kamerasysteme ersetzt (Spiegelersatzsysteme) oder wenigstens durch Kamerasysteme ergänzt. Dabei werden herkömmliche Spiegelsysteme ersetzt oder ergänzt, die für ein Kraftfahrzeug vorgeschrieben sind, wie beispielsweise Außenspiegel (Hauptspiegel), Innenspiegel an PKWs oder Weitwinkelspiegel und Frontspiegel an Nutzfahrzeugen. Bei solchen Spiegelersatzsystemen wird dem Fahrer des Fahrzeugs das entsprechende Sichtfeld, das herkömmlicherweise durch einen Spiegel einsehbar gemacht wird, mitunter dauerhaft und in Echtzeit auf einem Monitor oder einer anderen Wiedergabeeinheit beispielsweise im Innenraum des Fahrzeugs angezeigt, so dass der Fahrer des Fahrzeugs jederzeit Einsicht in das entsprechende Sichtfeld nehmen kann, obwohl er weder direkte Sicht in das entsprechende Sichtfeld hat noch ein Spiegel vorgesehen ist. Weiterhin finden Kamerasysteme am Fahrzeug im Rahmen von sogenannten Fahrerassistenzsystemen (ADAS) Einsatz, bei welchen entweder ebenfalls die von den Kamerasystemen aufgenommenen Daten, beispielsweise in Abhängigkeit von der jeweilig vorliegenden Fahrsituation, dem Fahrer des Fahrzeugs angezeigt werden, oder aber bei denen die erfassten Bilddaten ausgewertet werden, um andere Komponenten des Fahrzeugs zu steuern, wie beispielsweise im Rahmen von Abstands- und/oder Hinderniserkennung, Fahrbahnzustandserkennung, Spurhalteassistenten, Verkehrszeichenerkennung usw.

Aus dem Stand der Technik sind insbesondere Spiegelersatzsysteme für Nutzfahrzeuge mit Zugeinheit und Anhänger bekannt, die zwei oder mehr Kameras mit jeweils unterschiedlichen Öffnungswinkeln zur Aufnahme unterschiedlicher Sichtfelder, üblicherweise Sichtfelder der Klasse II und IV nach ECE R46, aufweisen. Diese Kameras sind in der Regel ortsfest mit der Zugeinheit des Fahrzeugs verbunden. Sichtsysteme mit zwei Kameras sind entweder so ausgebildet, dass bei zur Zugeinheit unterschiedlicher Ausrichtung des Anhängers, d.h. sich nicht in der Längsachse der Zugeinheit befindlichem Anhänger, wenigstens eine der beiden Kameras zur Erfassung der Fahrzeugumgebung um eine bei horizontalem Stand des Fahrzeugs vertikale Achse (Hochachse) geschwenkt wird. Ein Schwenkmechanismus ist jedoch anfällig für Beschädigungen aufgrund von Umwelteinflüssen und mechanischen Einflüssen, wie beispielsweise Vibrationen. Alternativ wird bei Verwendung von Sichtsystemen mit zwei Kameras bei zur Zugeinheit unterschiedlicher Ausrichtung des Anhängers die zu erfassende Fahrzeugumgebung aus dem Sichtbereich der Kamera für den Weitwinkelbereich ausgeschnitten und auf einem Monitor vergrößert dargestellt. Die Kamera für den Weitwinkelbereich weist jedoch durch den großen Bildaufnahmewinkel eine geringe Grundauflösung auf, weswegen der aus dem Weitwinkelbereich ausgeschnittene Bildbereich ebenfalls eine geringe Auflösung aufweist, die keine zuverlässige Einschätzung der Fahrzeugumgebung ermöglicht. Weiter alternativ wird bei Sichtsystemen mit zwei Kameras der Sichtbereich der Kamera für das Hauptsichtfeld innerhalb des Hauptsichtfelds digital geschwenkt, wodurch jedoch nur eine eingeschränkte Erfassung der Fahrzeugumgebung möglich ist und extreme Knickwinkel zwischen Zugeinheit und Anhänger aufgrund eines begrenzten maximalen Aufnahmewinkels der Kamera mitunter nicht erfasst werden.

Ein Sichtsystem, das zwei Kameras zur Aufnahme von zwei verschiedenen Sichtfeldern und wenigstens einen Monitor zur Wiedergabe der Sichtfelder aufweist, ist beispielsweise aus der DE 10 2015 218 033 A1 bekannt. Dabei ist das darin offenbarte Sichtsystem derart angepasst, dass es das Monitorbild derart adaptiert, dass eine ausreichende rückwärtige Sicht noch sichergestellt ist. Die Adaption des Monitorbildes erfolgt entweder durch ein mechanisches Verschwenken der jeweiligen Kamera und damit des Aufnahmefelds der Kamera oder durch Verschiebung eines auf dem Monitor angezeigten Bildausschnitts des jeweiligen Kamerabildes durch Verwendung von Rechen- und Steuergeräten und geeigneten Bildbearbeitungsprogrammen. Weitere Sichtsysteme sind aus der DE 10 2013 214368 A1, der EP 2 623 374 A1, der DE 10 2014 006153 A1 und der DE 10 2010 032411 A1 bekannt.

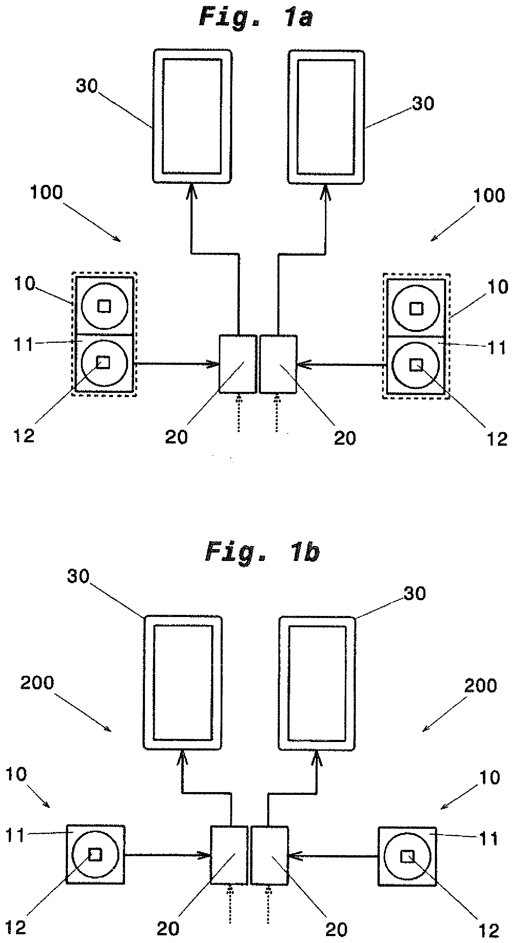

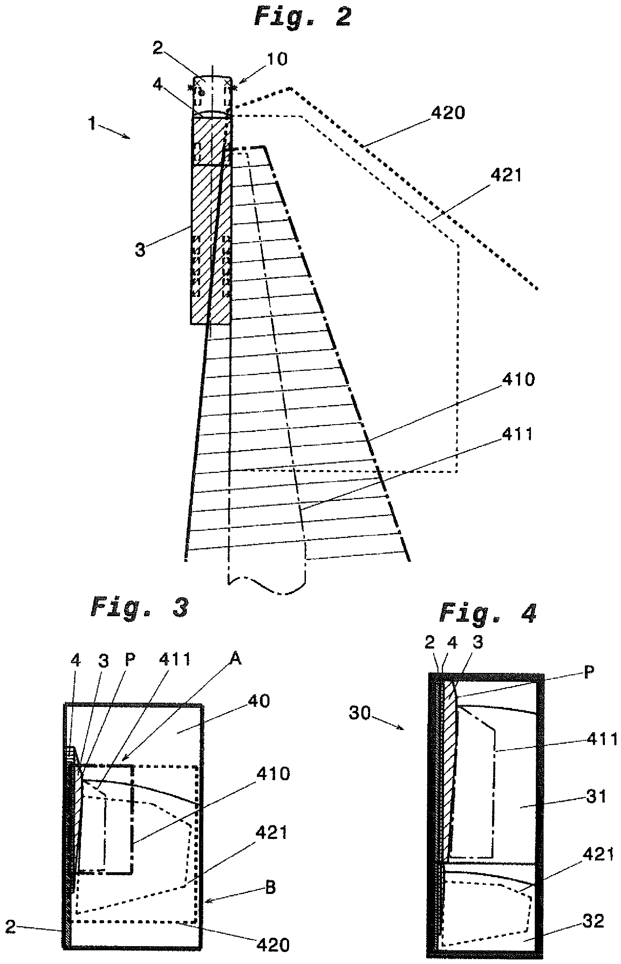

DE102013214368A1 offenbart ein Sichtsystem für ein Fahrzeug mit einer Zugeinheit 2 und einem Anhänger 3, enthaltend: eine Aufnahmeeinheit mit einem Bildsensor zum Aufnehmen eines Sichtbereichs 4 um das Fahrzeug herum in Form von Bilddaten zum Verarbeiten der von der Aufnahmeeinheit aufgenommenen Bilddaten, und eine Wiedergabeeinheit zur Wiedergabe eines ersten Bildausschnitts des von der Aufnahmeeinheit aufgenommenen Sichtbereichs, wobei, wenn die Zugeinheit 2 und der Anhänger 3 in Längsrichtung des Fahrzeugs miteinander im Wesentlichen fluchten, die Verarbeitungseinheit dem Sichtbereich 4 des Bildsensors den ersten Bildausschnitt an einer ersten ursprünglichen Position (Abbildung 1) entnimmt, und wobei, wenn die Zugeinheit 2 und der Anhänger 3 in einem Winkel im Wesentlichen ungleich 0° zueinander angeordnet sind, die Verarbeitungseinheit dem Sichtbereich 4 des einen Bildsensors den ersten Bildausschnitt an einer ersten modifizierten Position (Abbildung 3) entnimmt.

EP 2 623 374 A1 offenbart ein Sichtsystem für ein Fahrzeug mit einer Zugeinheit und einem Anhänger enhaltend: eine Aufnahmeeinheit 43 mit wenigstens einem Bildsensor zum Aufnehmen eines Sichtbereichs um das Fahrzeug herum in Form von Bilddaten, wobei die Aufnahmeeinheit 43 an der Zugeinheit anbringbar ist, eine Verarbeitungseinheit 30 zum Verarbeiten der von der Aufnahmeeinheit 43 aufgenommenen Bilddaten, und eine Wiedergabeeinheit 20 zur Wiedergabe eines ersten Bildausschnitts 51 und eines zweiten Bildausschnitts 52 des von der Aufnahmeeinheit 53 aufgenommenen Sichtbereichs, wobei, wenn die Zugeinheit und der Anhänger in Längsrichtung des Fahrzeugs miteinander im Wesentlichen fluchten (siehe Figuren), die Verarbeitungseinheit 30 dem Sichtbereich des einen Bildsensors den ersten Bildausschnitt 51 an einer ersten ursprünglichen Position und den zweiten Bildausschnitt 52 an einer zweiten ursprünglichen Position entnimmt, wobei die Auflösung des ersten Bildausschnitts 51 an der ursprünglichen Position auf der Wiedergabeeinheit 20 höher ist als die Auflösung des zweiten Bildausschnitts 52 an der ursprünglichen Position (siehe Absätze [0032]), wobei die Bildaufnahmeeinheit eine einzige Kamera 53 aufweist, wobei die einzige Kamera 53 einen einzigen Bildsensor 53 aufweist.

Bei Fahrzeugen mit Kamerasystemen und Anhänger besteht jedoch das Problem, dass der Fahrer bei unterschiedlicher Ausrichtung des Anhängers zum Fahrzeug, also bei unterschiedlichen Winkeln der Fahrzeuglängsachse zur Anhängerlängsachse, einen Bereich neben dem Fahrzeug nicht hinreichend überwachen kann, da eine Bewegung des Kopfes bei der Verwendung von Kamerasystemen nicht zu einer Verschiebung des von der Kamera erfassten Umgebungsbereichs führt.

Davon ausgehend ist es Aufgabe der vorliegenden Erfindung, ein kamerabasiertes Sichtsystem für ein Fahrzeug, insbesondere ein Nutzfahrzeug mit Zugeinheit und Anhänger, bereitzustellen, das dem Fahrer jederzeit eine zuverlässige Einschätzung der Umgebung um das Fahrzeug, insbesondere um den Anhänger herum gewährleistet.

Die obige Aufgabe wird mit einem Sichtsystem nach Anspruch 1, einer Sichtsystem-Anordnung nach Anspruch 14 und einem Spiegelersatzsystem nach Anspruch 15 gelöst. Bevorzugte Ausführungsformen sind in den Unteransprüchen angegeben.

Der Erfindung liegt der Gedanke zugrunde, ein Sichtsystem für ein Fahrzeug mit einer Zugeinheit und einem Anhänger bereitzustellen, das eine Aufnahmeeinheit mit wenigstens einem Bildsensor zum Aufnehmen eines Sichtbereichs um das Fahrzeug herum in Form von Bilddaten, wenigstens eine Verarbeitungseinheit zum Verarbeiten der von der Aufnahmeeinheit aufgenommenen Bilddaten, und wenigstens eine Wiedergabeeinheit zur Wiedergabe von einem ersten Bildausschnitt und einem zweiten Bildausschnitt des von der Aufnahmeeinheit aufgenommenen Sichtbereichs enthält. Die Aufnahmeeinheit ist an der Zugeinheit orts- und lagefest anbringbar bzw. an dieser angebracht, d.h. die Aufnahmeeinheit hat relativ zur Zugeinheit genau eine vordefinierte Betriebsposition. Die Verarbeitungseinheit ist derart ausgebildet, dass sie, wenn die Zugeinheit und der Anhänger in Längsrichtung des Fahrzeugs miteinander im Wesentlichen fluchten, d.h. der Winkel zwischen Zugeinheit und Anhänger 0° beträgt, dem Sichtbereich des wenigstens einen Bildsensors den ersten Bildausschnitt an einer ersten ursprünglichen Position und den zweiten Bildausschnitt an einer zweiten ursprünglichen Position entnimmt, und, wenn die Zugeinheit und der Anhänger in einem Winkel im Wesentlichen ungleich 0° zueinander angeordnet sind, dem Sichtbereich des wenigstens einen Bildsensors den ersten Bildausschnitt an einer ersten modifizierten Position und/oder den zweiten Bildausschnitt an einer zweiten modifizierten Position entnimmt. Dabei ist die Auflösung des ersten Bildausschnitts an der ursprünglichen Position und an der modifizierten Position auf der Wiedergabeeinheit stets höher ist als die Auflösung des zweiten Bildausschnitts an der ursprünglichen Position und an der modifizierten Position auf der Wiedergabeeinheit.

Das erfindungsgemäße Sichtsystem basiert somit auf der Idee, aus einem von der Bildaufnahmeeinheit aufgenommenen einzigen Sichtbereich, wenigstens zwei Bildausschnitte, d.h. wenigstens einen ersten und einen zweiten Bildausschnitt, zu extrahieren, deren Positionen innerhalb des Sichtbereichs des Bildsensors abhängig von der Stellung des Anhängers zu der Zugeinheit variieren. Führt das Fahrzeug eine Geradeausfahrt oder eine gerade Rückwärtsfahrt aus, bei der der Anhänger jeweils in Längsrichtung des Fahrzeugs mit der Zugeinheit im Wesentlichen fluchtend hinter dieser angeordnet ist und der Winkel zwischen der Zugeinheit und dem Anhänger ungefähr 0° beträgt, befinden sich die beiden auf der Wiedergabeeinheit angezeigten Bildausschnitte jeweils an einer ursprünglichen Position, die es dem Fahrer ermöglicht, die Umgebung um das Fahrzeug und insbesondere den Anhänger herum zuverlässig beobachten und einschätzen zu können. Bei einer Kurvenfahrt, wie beispielsweise bei einer Kurvenfahrt über Land, einem Abbiegevorgang oder bei einem Rangiervorgang schert der Anhänger aus. Dies führt zu einer zu der Zugeinheit unterschiedlichen Ausrichtung des Anhängers. Die Zugeinheit und der Anhänger schließen dann einen Winkel ungleich 0° ein, insbesondere deutlich von 0° abweichend. Um zu gewährleisten, dass der Fahrer nach wie vor die Umgebung um den Anhänger herum zuverlässig einsehen kann, entnimmt die Verarbeitungseinheit dem Sichtbereich wenigstens einen der wenigstens zwei Bildausschnitte, d.h. entweder den ersten oder den zweiten Bildausschnitt, an einer modifizierten Position innerhalb des Sichtbereichs. Mit anderen Worten schneidet bzw. extrahiert die Verarbeitungseinheit bei Ausscheren des Anhängers jeweils ein Bild an einer anderen Stelle aus dem Sichtbereich der Bildaufnahmeeinheit bzw. dem Bildsensor heraus, was eine für den Fahrer zuverlässige Einschätzung der Umgebung um den Anhänger herum auch bei ausgeschertem, winklig zur Zugeinheit angeordneten Anhänger ermöglicht. Unter dem Begriff "Sichtbereich" ist die Fläche des Sensors zu verstehen, auf der die Fahrzeugumgebung aufgenommen wird und somit abgebildet ist, d.h. die Verarbeitungseinheit entnimmt die Bereiche an unterschiedlichen Stellen des Bildsensors im ursprünglichen bzw. modifizierten Zustand.

Der Begriff "im Wesentlichen fluchtend" bezieht sich nicht nur auf eine exakt fluchtende Anordnung von Zugeinheit und Anhänger (d.h. eine Anordnung, bei der der Winkel zwischen Zugeinheit und Anhänger genau 0° beträgt), sondern auch auf eine Anordnung von Zugeinheit und Anhänger, die kleine Abweichungen von 0° mit einschließt und damit nicht starr auf exakt 0° begrenzt ist, bevorzugt 40°, weiter bevorzugt 30° und noch weiter bevorzugt 15°. Die Abweichungen, die unter dem Begriff "im Wesentlichen fluchtend" zu subsummieren sind, sind abhängig von diversen Betriebsparametern, wie dem Lenkwinkel oder der Geschwindigkeit, und daher abhängig von der entsprechenden Betriebssituation und damit variabel. Ebenso ist der Begriff "im Wesentlichen ungleich 0°" nicht auf alle Winkel beschränkt, die von 0° abweichen, sondern bezieht sich vielmehr auf Winkel, die abhängig von den oben genannten Eingangsgrößen als Winkel ermittelt werden, bei denen eine Erfassung der Fahrzeugumgebung unzureichend ist, bevorzugt Winkel zwischen 90° (Anhänger steht senkrecht zur Zugeinheit) und 40°, weiter bevorzugt 50°, noch weiter bevorzugt 60°, noch weiter bevorzugt 65°.

Entnehmen, ausschneiden und extrahieren bedeutet vorliegend, dass eine digitale Verschiebung des jeweiligen Bildausschnitts innerhalb des gesamten Sichtbereichs erfolgt, so dass ein anderer, modifizierter, sich von dem ursprünglichen Bildausschnitt wenigstens teilweise unterscheidender Bildausschnitt aus dem einzigen Sichtbereich der Bildaufnahmeeinheit ausgewählt und herausgenommen wird. Es wird demzufolge ein weiterer Bildausschnitt aus dem Sichtbereich ausgelesen, der sich von dem ursprünglichen Bildausschnitt wenigstens teilweise unterscheidet. So wird ein mechanisches Schwenken bzw. Bewegen von Teilen der Kamera vermieden. Das Sichtsystem ist robust gegenüber Umwelteinflüssen, wie Vibrationen, und kostengünstig herzustellen.

Der einzige Sichtbereich, der sowohl den ersten als auch den zweiten Bildausschnitt aufweist, wird durch eine einzige Kamera mit einem einzigen Sensor und einer geeigneten Linsenanordnung und Geometrie "auf einmal" aufgenommen. Durch Generieren bzw. Aufnehmen eines einzigen Sichtbereichs, der sowohl den ersten als auch den zweiten Bildausschnitt aufweist und derart ausgelegt ist, dass er auch bei maximalem Ausscheren des Anhängers eine Fahrzeugumgebung noch erfasst, kann somit ein digitales Schwenken über den gesamten Sichtbereich erfolgen. Es ist folglich möglich, die Bildausschnitte auch bei maximalem Ausscheren des Anhängers derart zu verschieben, dass die Umgebung um das in Hauptfahrtrichtung hintere Ende des Anhängers immer noch für den Fahrer sichtbar ist.

Um dem Fahrer stets eine zuverlässige Einschätzung der Umgebung des Anhängers zu ermöglichen, ist es erforderlich, dass der wenigstens eine erste Bildausschnitt an jeder Position, d.h. an der ursprünglichen Position und an einer modifizierten Position, auf der Wiedergabeeinheit stets eine höhere Auflösung aufweist als der zweite oder jeder weitere Bildausschnitt auf der Wiedergabeeinheit. Die Auflösung des ersten Bildausschnitts auf der Wiedergabeeinheit muss somit immer größer sein als die Auflösung des wenigstens einen zweiten Bildausschnitts auf der Wiedergabeeinheit und zwar unabhängig davon, ob nur der erste Bildausschnitt an einer modifizierten Position entnommen wird oder nur der zweite und jeder weitere Bildausschnitt an einer modifizierten Position entnommen wird oder sowohl der erste als auch der zweite Bildausschnitt an einer ersten und einer zweiten modifizierten Position aufgrund eines Ausscherens des Anhängers dem Sichtbereich entnommen werden. So wird sichergestellt, dass der Fahrer den ersten Bildausschnitt stets ausreichend scharf auf der Wiedergabeeinheit sehen kann.

Die höhere Auflösung in dem ersten Bildausschnitt kann im Vergleich zu dem zweiten Bildausschnitt auf der Wiedergabeeinheit durch Bearbeitung der Bilddaten (Datenverarbeitung durch die Verarbeitungseinheit) generiert werden. Bevorzugt wird die höhere Auflösung jedoch dadurch erreicht, dass der Sichtbereich des Bildsensors über seine gesamte Fläche insgesamt eine hohe Auflösung mit gleichbleibend guter Qualität aufweist und der erste Bildausschnitt mit dieser hohen Auflösung auf der Wiedergabeeinheit dargestellt wird, während der zweite Bildausschnitt für eine Darstellung auf der Wiedergabeeinheit größenmäßig reduziert wird und so mit einer geringeren Auflösung als der erste Bildausschnitt auf der Wiedergabeeinheit dargestellt wird. Mit anderen Worten wird die Größe des zweiten Bildausschnitts bei der Wiedergabe gegenüber der Größe des zweiten Bildausschnitts bei der Aufnahme reduziert, während die Größe des ersten Bildausschnitts bei der Wiedergabe gegenüber der Größe des ersten Bildausschnitts bei der Aufnahme gleicht bleibt oder nur in einem Umfang reduziert wird, der über dem Reduzierungsumfang des zweiten Bildausschnitts liegt. Es ist auch denkbar, die Größe des ersten Bildausschnitts bei der Wiedergabe gegenüber des ersten Bildausschnitts bei der Aufnahme zu vergrößern. Grundsätzlich gilt, dass die Größe des zweiten Bildausschnitts bei der Wiedergabe auf der Wiedergabeeinheit immer derart nach unten skaliert werden muss, dass die durch die Skalierung entstehende Auflösung geringer als die Auflösung des ersten Bildausschnitts bei der Wiedergabe ist. Durch die relative Verkleinerung eines der auf der Wiedergabeeinheit dargestellten Bildausschnitte ergibt sich für diesen eine geringere Auflösung als für den relativ dazu weniger verkleinerten Bildausschnitt.

Unter dem Begriff "Auflösung" kann die Anzahl von Pixeln auf einer gewissen Fläche zu verstehen sein. Bevorzugt ist unter dem Begriff "Auflösung" jedoch die "Auflösung bezogen auf Linienpaare pro Längeneinheit", z.B. mm, zu verstehen, wie sie mittels einer Modulationsübertragungsfunktion (Modulation Transfer Function, MTF), die als das Verhältnis von Bildkontrast zu Objektkontrast oder das Verhältnis von realem Bildkontrast zu idealem Bildkontrast beim Betrachten bestimmter Linienmuster definiert ist, beschrieben werden kann.

Die Verarbeitungseinheit dient der Bildverarbeitung bzw. der Bildbearbeitung (z.B. der Auswahl geeigneter Größen des ersten und des zweiten Bildausschnitts, so dass das Kriterium erfüllt ist, dass die Auflösung des ersten Bildausschnitts bei einer Darstellung auf der Wiedergabeeinheit stets größer ist als die Auflösung des zweiten Bildausschnitts bei einer Darstellung auf der Wiedergabeeinheit) und kann mitunter auch als Steuereinheit für die Bildaufnahmeeinheit und/oder die Wiedergabeeinheit fungieren (Sichtsystem-ECU) und Steuersignale der Bildaufnahmeeinheit und/oder der Wiedergabeeinheit empfangen und/oder Steuersignale an die Bildaufnahmeeinheit und/oder die Wiedergabeeinheit ausgegeben. Alternativ können die Bildaufnahmeeinheit und/oder die Wiedergabeeinheit auch von einer fahrzeugseitigen Steuereinheit (Fahrzeug-ECU) gesteuert werden. Die Verarbeitungseinheit ist entweder separat von der Bildaufnahmeeinheit oder der Wiedergabeeinheit vorgesehen oder in die Bildaufnahmeeinheit oder die Wiedergabeeinheit integriert.

Die Wiedergabeeinheit kann im Inneren einer Fahrerkabine derart montiert sein, dass der Fahrer sie mühelos einsehen kann (beispielsweise an einer linken oder rechten A-Säule oder mittig) und kann ein Monitor, wie z.B. ein TFT-, LCD-, OLED-Monitor, etc. sein. Die Bildaufnahmeeinheit kann eine oder mehrere Kameras mit einer CMOS oder CCD-Technologie enthalten.

Die Bildaufnahmeeinheit weist eine einzige Kamera auf, die bevorzugt einen einzigen Bildsensor mit einer hohen Auflösung aufweist. Eine einzige Kamera, insbesondere mit einem einzigen Sensor, ist durch Einsatz und Auswahl von speziellen Linsenanordnungen als optisches Element aktiv so gestaltet, dass einander sich eigentlich widersprechende Anforderungen, wie beispielsweise eine Weitwinkelabbildung, d.h. eine Abbildung mit großem Bildwinkel, und eine im Wesentlichen verzeichnungsfreie bzw. verzeichnungsarme Abbildung mit hoher Auflösung, wie beispielsweise eine Hauptsichtfeldabbildung, für das gewünschte Sichtfeld gleichzeitig erzielt werden können. Eine Kamera mit einem einzigen Bildsensor ist beispielsweise in der DE 10 2017 108 569 B4 beschrieben. Eine einzige Kamera hat den Vorteil, dass sich die Auflösung bei Entnehmen eines anderen Bildausschnitts an einer modifizierten Position nicht abrupt von einer hohen Auflösung zu einer geringeren Auflösung ändert. Ferner ist kein Umschalten notwendig, um das komplette Weitwinkelsichtfeld während der Entnahme des Bildausschnitts zu nutzen. Zudem wird durch eine einzige Kamera ein kostengünstiges Sichtsystem erreicht.

Der erste Bildausschnitt kann, zumindest in der ursprünglichen Position, ein erstes gesetzlich vorgeschriebenes Sichtfeld und/oder der zweite Bildausschnitt kann ein zweites gesetzlich vorgeschriebenes Sichtfeld enthalten. Dabei ist es denkbar, dass bei Verschieben des ersten und/oder des zweiten Bildausschnitts der erste ursprüngliche Bildausschnitt als zusätzlicher dritter Bildausschnitt weiter angezeigt wird, insbesondere dann, wenn einer der verschobenen Bildausschnitte nicht mehr das gesetzlich vorgeschriebene Sichtfeld abbildet und somit zusätzlich zum gesetzlich vorgeschriebenen Sichtfeld abgebildet wird. Es werden somit an der Betriebsposition der Bildausschnitte an der ursprünglichen Position zwei Bildausschnitte angezeigt, die zwei gesetzlich vorgeschriebenen Sichtfeldern entsprechen. Bei Ausscheren des Anhängers werden dann drei Sichtfelder angezeigt, von denen eines dem ersten gesetzlich vorgeschriebenen Sichtfeld an der ursprünglichen Position entspricht, ein weiteres dem ersten Sichtfeld an der modifizierten Position entspricht und das letzte entweder dem zweiten gesetzlich vorgeschriebenen Sichtfeld an der ursprünglichen Position oder dem zweiten Sichtfeld an der modifizierten Position entspricht, je nachdem ob das zweite Sichtfeld verschoben wird oder nicht. In diesem Fall wird der erste Bildausschnitt nicht verschoben bzw. nicht durch einen ersten Bildausschnitt an einer modifizierten Position ersetzt, sondern als ein dritter zusätzlicher Bildausschnitt beibehalten. Weiter ist es denkbar, dass trotz Ausscherens des Anhängers sowohl der erste als auch der zweite Bildausschnitt an der ursprünglichen Position weiterhin dem Fahrer als zusätzliche Bildausschnitte angezeigt werden, während der erste und der zweite Bildausschnitt an eine ersten bzw. zweite modifizierte Position verschoben werden. Die Anzeige des ersten und/oder zweiten Bildausschnitts an der ursprünglichen Position kann auf einer oder mehrerer zusätzlicher Wiedergabeeinheiten erfolgen. Bevorzugt ist vorliegend jedoch das Verschieben des ersten und/oder zweiten Bildausschnitts zu der entsprechenden modifizierten Position ohne ein gleichzeitiges zusätzliches Anzeigen des ersten und/oder zweiten Bildausschnitts an der entsprechenden ursprünglichen Position.

Vorzugsweise enthält das erste gesetzlich vorgeschriebene Sichtfeld des ersten Bildausschnitts ein Hauptsichtfeld und/oder das zweite gesetzlich vorgeschriebene Sichtfeld des zweiten Bildausschnitts ein Weitwinkelsichtfeld, wie sie beispielsweise in der EU-Regelung ECE R46 als Hauptsichtfeld II und Weitwinkelsichtfeld IV definiert sind. Die Auflösungen im Hauptsichtfeld und Weitwinkelsichtfeld müssen dann den Anforderungen der ECE R46 in der Betriebsposition entsprechen (Mindestauflösung).

Bevorzugter Weise ist der erste Bildausschnitt auf dem Sichtbereich des Bildsensors derart positioniert und orientiert, dass er an der ersten ursprünglichen Position einen Teil der Zugeinheit abbildet, so dass der Fahrer auch einen Teil der Umgebung neben der Zugeinheit betrachten kann und eine bessere Orientierung im Raum hat. Dabei kann der Teil der Zugeinheit im Hauptsichtfeld und/oder im Weitwinkelsichtfeld dargestellt sein.

Nach einer bevorzugten Ausführungsform weist der erste Bildausschnitt an der ursprünglichen Position und der erste Bildausschnitt an der modifizierten Position einen Referenzpunkt des Anhängers auf. Als Referenzpunkt können beispielsweise das in Hauptfahrrichtung hintere oder vordere Ende des Anhängers, das Anhängerhinterrad, die letzte Achse des Anhängers, etc. dienen.

Der Referenzpunkt kann sich beim Verschieben des Bildausschnitts relativ zu dem Bildausschnitt verschieben, d.h. an der modifizierten Verschiebeposition seine Position relativ zu seiner ursprünglichen Position ändern. Es ist jedoch bevorzugt, dass sich der Referenzpunkt innerhalb des ersten Bildausschnitts an der ersten ursprünglichen Position und an der ersten modifizierten Position an derselben Stelle auf dem Bildsensor befindet, so dass er beispielsweise stets den gleichen Abstand zum Rand der Wiedergabeeinheit hat und es dem Fahrer dadurch leichter fällt, den Anhänger räumlich in seiner Umgebung einzuordnen. Beispielsweise bleibt das Anhängerende bei der gesamten Kurvenfahrt in einem bestimmten Abstand von der vertikalen Kante der Wiedergabeeinheit. Der Referenzpunkt bleibt somit nur in der dynamischen Phase des Nachführens des jeweiligen Bildausschnitts an derselben Stelle auf dem Bildsensor. Schert der Anhänger aus, ohne dass sich der Bildausschnitt verschiebt, d.h. bei geringen Lenkwinkeln oder einem geringen Zeitverzug, wandert der Referenzpunkt in dem gezeigten ursprünglichen Bildausschnitt und bleibt damit nicht an derselben Stelle.

Vorzugsweise überschneiden sich der erste Bildausschnitt und der zweite Bildausschnitt auf dem Bildsensor wenigstens teilweise.

Bevorzugter Weise weist die Wiedergabeeinheit einen definierten ersten Anzeigebereich zur Wiedergabe des ersten Bildausschnitts an der ersten ursprünglichen Position und einen definierten zweiten Anzeigebereich zur Wiedergabe des zweiten Bildausschnitts an der zweiten ursprünglichen Position auf. Z.B. kann bei einer rechteckigen Wiedergabeeinheit, deren Erstreckung in der Hoch-Tief-Richtung länger als in der Breitenrichtung ist, der erste Bildausschnitt 2/3 der oberen Wiedergabefläche der Wiedergabeeinheit einnehmen, während der zweite Bildausschnitt 1/3 der unteren Wiedergabefläche der Wiedergabeeinheit einnimmt, oder der erste Bildausschnitt kann 3/4 der oberen Wiedergabefläche der Wiedergabeeinheit einnehmen, während der zweite Bildausschnitt 1/4 der unteren Wiedergabefläche der Wiedergabeeinheit einnimmt. Alternativ können die beiden Bildausschnitte auch nebeneinander, d.h. in einer horizontal benachbarten/aneinander angrenzenden Anordnung angeordnet sein. Es ist bevorzugt, dass der erste Bildausschnitt in einem flächenmäßig größeren Anzeigebereich als der zweite Bildausschnitt angezeigt wird, da so gewährleistet werden kann, dass der erste Bildausschnitt bei der Wiedergabe eine höhere Auflösung aufweist als der zweite Bildausschnitt.

Vorzugsweise ist das Verhältnis der Größe des ersten definierten Anzeigebereichs zu der Größe des zweiten definierten Anzeigebereichs unveränderlich, um den Fahrer stets eine zuverlässige Einordnung der auf den Anzeigebereichen abgebildeten Fahrzeugumgebung zu ermöglichen. Es ist jedoch auch denkbar, dass sich die Größe des ersten definierten Anzeigebereichs zu der Größe des zweiten definierten Anzeigebereichs, wenn zur besseren Abbildung der Fahrzeugumgebung erforderlich, ändert. Beispielsweise können die Ansichten des ersten Bildausschnitts und des zweiten Bildausschnitts, z.B. des Hauptsichtfelds und des Weitwinkelsichtfelds, umgekehrt werden, oder die Aufteilung der gesamten Wiedergabefläche der Wiedergabeeinheit kann gegenüber der ursprünglichen Aufteilung bei Anzeige der Bildausschnitte an den ursprünglichen Positionen verändert sein, wie z.B. von ursprünglich 1:3 zu 1:4, etc.

Vorteilhafter Weise ist der Bereich, der durch den ersten Bildausschnitt und/oder den zweiten Bildausschnitt an der modifizierten Position abgebildet wird, näher an oder weiter weg von der Zugeinheit angeordnet als der Bereich, der durch den ersten Bildausschnitt und/oder den zweiten Bildausschnitt an der ursprünglichen Position abgebildet wird.

Alternativ oder zusätzlich sind die Größe des ersten Bildausschnitts und/oder die Größe des zweiten Bildausschnitts an der modifizierten Position gleich der Größe des ersten Bildausschnitts und/oder der Größe des zweiten Bildausschnitts an der ursprünglichen Position. Es ist aber auch denkbar, dass die Größe des ersten Bildausschnitts und/oder die Größe des zweiten Bildausschnitts an der modifizierten Position gegenüber der Größe des ersten Bildausschnitts und/oder der Größe des zweiten Bildausschnitts an der ursprünglichen Position veränderlich (kleiner oder größer) ist, wenn dies eine bessere Einschätzbarkeit der Fahrzeugumgebung fördert.

Alternativ oder weiter zusätzlich sind das Seitenverhältnis des ersten Bildausschnitts und/oder das Seitenverhältnis des zweiten Bildausschnitts an der modifizierten Position gleich dem Seitenverhältnis des ersten Bildausschnitts und/oder dem Seitenverhältnis des zweiten Bildausschnitts an der ursprünglichen Position. Es ist aber auch denkbar, dass das Seitenverhältnis des ersten Bildausschnitts und/oder das Seitenverhältnis des zweiten Bildausschnitts an der modifizierten Position gegenüber dem Seitenverhältnis des ersten Bildausschnitts und/oder dem Seitenverhältnis des zweiten Bildausschnitts an der ursprünglichen Position veränderlich ist, wenn dies eine bessere Einschätzbarkeit der Fahrzeugumgebung fördert.

Eine veränderliche Größe oder ein veränderliches Seitenverhältnis, insbesondere des ersten Bildausschnitts, ist insbesondere dann vorteilhaft, wenn bei Verschieben des ersten und/oder des zweiten Bildausschnitts zu der modifizierten Position der erste Bildausschnitt an der ursprünglichen Position als zusätzlicher dritter Bildausschnitt beibehalten wird, um den gesetzlichen Vorgaben, insbesondere in Hinblick auf ein permanentes Anzeigen der gesetzlich definierten Sichtfelder, zu entsprechen. So ist es in diesem Fall möglich, den ersten Bildausschnitt an der modifizierten Position ungeachtet gesetzlicher Vorgaben wie gewünscht zu vergrößern/verkleinern, dessen Form oder Seitenverhältnis zu ändern, weil die gesetzlichen Vorgaben durch Beibehalten des ersten Bildausschnitts an der ursprünglichen Position zusätzlich zu dem ersten Bildausschnitt an der modifizierten Position eingehalten werden.

Bevorzugter Weise ist der erste Anzeigebereich angepasst, den ersten Bildausschnitt gleichzeitig an der ursprünglichen und der modifizierten Position wiederzugeben, und der zweite Anzeigebereich ist angepasst, den zweiten Bildausschnitt wiederzugeben. Dabei kann der erste Bildausschnitt an der ursprünglichen Position eine in Richtung horizontal senkrecht zur Fahrzeuglängsachse veränderte Skalierung aufweisen als der erste Bildausschnitt an der modifizierten Position. Mit anderen Worten können die Anzeigebereiche der Wiedergabeeinheit derart ausgebildet sein, dass auf einem im montierten Zustand der Wiedergabeeinheit oben angeordneten Anzeigebereich, d.h., dem ersten Anzeigebereich, sowohl der erste Bildausschnitt an der ursprünglichen Position als auch an der modifizierten Position gezeigt wird und auf einem im montierten Zustand der Wiedergabeeinheit unten angeordneten Anzeigebereich, d.h., dem zweiten Anzeigebereich, der zweite Bildausschnitt angezeigt wird. Dabei weist der erste Bildausschnitt an der ursprünglichen Position in der Richtung horizontal senkrecht zur Fahrzeuglängsachse eine andere Skalierung auf als der erste Bildausschnitt an der modifizierten Position in der Richtung horizontal senkrecht zur Fahrzeuglängsachse. Genauer wird der erste Bildausschnitt an der ursprünglichen Position gegenüber dem ersten Bildausschnitt an der modifizierten Position gestaucht angezeigt, d.h., es fehlen beispielsweise Pixelspalten in der Richtung horizontal senkrecht zur Fahrzeuglängsachse. So kann der Fahrer die Fahrzeugumgebung auf der Seite des Fahrzeugs, auf der das Sichtsystem montiert ist, noch besser einschätzen, dadurch dass zumindest ein Teil des Fahrzeugs auf der Wiedergabeeinheit gestaucht wahrnehmbar ist.

Vorzugsweise ist die Verarbeitungseinheit dazu angepasst, Signale zum Beschreiben des Winkelverhältnisses zwischen der Zugeinheit und dem Anhänger einer am Fahrzeug montierten Signaleinrichtung zu empfangen. Abhängig von dem Steuersignal entnimmt die Verarbeitungseinheit dem Sichtbereich des Sensors einen ersten und/oder zweiten Bildausschnitt an einer modifizierten ersten und/oder zweiten Position oder nicht. Dabei kann die Signaleinrichtung zur Erzeugung eines manuellen Steuersignals angepasst sein, wodurch der Fahrer fahrsituationsbedingt eine Entnahme eines anderen Bildausschnitts aus dem Sichtfeld anfordern kann, wenn er die Umgebung um das Fahrzeug herum nicht mehr zuverlässig einsehen kann. Zusätzlich oder alternativ kann die Signaleinrichtung einen Fahrzeugsensor enthalten, der zur Erzeugung des Steuersignals angepasst ist. Die Signaleinrichtung zur Erzeugung eines manuellen Steuersignals kann ein Türbedienfeld, ein Touch-pad/-screen, eine Instrumententafel, etc. umfassen. Der Fahrzeugsensor kann eine Einrichtung zur Ermittlung eines Lenkwinkels und/oder eines Knickwinkels des Anhängers, einer Radposition, eines Gearratensensors, eines ABS-Sensors, eine Bildauswertungseinrichtung, etc. umfassen. Insbesondere ist jeder Sensor geeignet, der ein Signal zur Bestimmung der Ausrichtung des Anhängers relativ zur Zugmaschine erzeugen kann.

Vorzugsweise passt die Verarbeitungseinheit den ersten und zweiten Bildausschnitt an der ersten bzw. zweiten modifizierten Position basierend auf dem Steuersignal kontinuierlich an die Betriebssituation des Fahrzeugs an und zwar über den gesamten Sichtbereich, z.B. das gesamte Weitwinkelsichtfeld, so dass der Fahrer zu jeder Zeit die Umgebung um das Fahrzeug, insbesondere den Anhänger, einsehen kann, und die Betriebssicherheit des Fahrzeugs durch fahrsituationsangepasste Darstellung erhöht wird (sog. trailer panning/ Anhängernachführung). Mit anderen Worten kann der wenigstens eine nachgeführte (verschobene) Bildausschnitt bei einer dynamischen Nachführung unendlich viele Positionen während des Betriebs des Fahrzeugs einnehmen.

Dabei kann die Betriebssituation eine Kurvenfahrt sein (vorwärts oder rückwärts).

Nach einem weiteren Aspekt weist die vorliegende Erfindung eine Sichtsystem-Anordnung auf, die zwei Sichtsysteme wie oben beschrieben aufweist. Die beiden Sichtsysteme können an einer linken und rechten Außenseite einer Fahrerkabine eines Fahrzeugs montiert sein und spiegelbildlich zueinander ausgebildet sein. Die Verarbeitungseinheiten der beiden Sichtsysteme können derart miteinander kommunizieren, dass sie Daten austauschen. Beispielsweise können die Verarbeitungseinheiten der einzelnen Sichtsysteme Bild-/Videodaten oder Steuerbefehle austauschen. Der Datenaustausch erfolgt bevorzugt über eine Kabelverbindung des fahrzeugeigenen Bussystems (CAN-Bus). Es sind aber auch andere Arten der Datenübertragung zwischen den Verarbeitungseinheiten denkbar, wie beispielsweise über Bluetooth oder WLAN. Abhängig von den ausgetauschten Daten können bei Ausscheren des Anhängers beide Sichtsysteme den ersten Bildausschnitt und/oder den zweiten Bildausschnitt von der ersten bzw. zweiten ursprünglichen Position an eine erste bzw. zweite modifizierte Position verschieben oder nur eines der beiden Sichtsysteme kann wenigstens einen der ursprünglichen Bildausschnitte an eine modifizierte Position verschieben, während die übrigen Bildausschnitte an der jeweiligen ursprünglichen Position verleiben. Ein Austausch von Daten zwischen den beiden Sichtsystemen hat den Vorteil, dass die der Datenverarbeitung bzw. -bearbeitung zugrunde liegenden Algorithmen stabiler ablaufen. Beispielsweise kann durch einen Datenaustausch zwischen zwei an einem Fahrzeug montierten Sichtsystemen überprüft werden, ob die Signale, die die einzelnen Sichtsysteme von der Signaleinrichtung erhalten, korrekt sind, indem die Signale mit den von der anderen aus den beiden Sichtsystemen erhaltenen Signalen verglichen werden (Korrekturalgorithmus).

Nach einem weiteren Aspekt der vorliegenden Erfindung weist ein Spiegelersatzsystem für ein Fahrzeug, insbesondere ein Nutzfahrzeug mit Zugeinheit und Anhänger, ein Sichtsystem auf, das wie oben beschrieben ausgestaltet ist, oder eine Sichtsystem-Anordnung mit zwei Sichtsystemen wie oben beschrieben auf.

Nachfolgend wird die Erfindung beispielhaft anhand der beigefügten Figuren beschrieben, wobei gleiche Bezugszeichen gleiche Bauteile bezeichnen. Es zeigen:
- Fig. 1a: zwei erfindungsgemäße Sichtsysteme für ein Fahrzeug,
- Fig. 1b: zwei erfindungsgemäße Sichtsysteme für ein Fahrzeug gemäß einer alternativen Ausführungsform,
- Fig. 2: eine Draufsicht auf ein Fahrzeug mit Zugeinheit und Anhänger in zueinander fluchtender Anordnung und einem ersten Bildausschnitt und einem zweiten Bildausschnitt an einer ursprünglichen Position,
- Fig. 3: einen Sichtbereich einer Bildaufnahmeeinheit mit dem ersten Bildausschnitt und dem zweiten Bildausschnitt an der ursprünglichen Position aus Fig. 2,
- Fig. 4: eine Wiedergabeeinheit, die den ersten Bildausschnitt und den zweiten Bildausschnitt an der ursprünglichen Position aus Fig. 2 und 3 wiedergibt,
- Fig. 5: eine Draufsicht auf ein Fahrzeug mit Zugeinheit und Anhänger in zueinander winkliger Anordnung und einem ersten Bildausschnitt an einer modifizierten Position und dem zweiten Bildausschnitt an der ursprünglichen Position aus Fig. 2,
- Fig. 6: einen Sichtbereich der Bildaufnahmeeinheit mit dem ersten Bildausschnitt an der modifizierten Position aus Fig. 5 und dem zweiten Bildausschnitt an der ursprünglichen Position aus Fig. 2,
- Fig. 7: eine Wiedergabeeinheit, die den ersten Bildausschnitt an der modifizierten Position aus Fig. 5 und den zweiten Bildausschnitt an der ursprünglichen Position aus Fig. 2 wiedergibt,
- Fig. 8: eine Wiedergabeeinheit, die einen ersten Bildausschnitt und einen zweiten Bildausschnitt schematisch mittels einer Modulationsübertragungsfunktion zeigt, Fig. 9 eine Draufsicht auf ein Fahrzeug mit Zugeinheit und Anhänger in zueinander winkliger Anordnung und eine erfindungsgemäße Sichtsystem-Anordnung mit einem links und einem rechts am Fahrzeug angeordneten Sichtsystem,
- Fig. 10: einen Sichtbereich des linken Sichtsystems,
- Fig. 11: einen Sichtbereich des rechten Sichtsystems,
- Fig. 12: eine linke Wiedergabeeinheit, die eine linke Fahrzeugumgebung zeigt, und
- Fig. 13: eine rechte Wiedergabeeinheit, die eine rechte Fahrzeugumgebung zeigt.

Fig. 1a zeigt zwei Sichtsysteme 100, die jeweils links und rechts an einer Außenseite einer Fahrerkabine eines Fahrzeugs, insbesondere eines Nutzfahrzeugs, wie ein LKW, montiert werden können. Jedes Sichtsystem 100 weist eine Bildaufnahmeeinheit 10 auf, die zwei Kameras 11 mit je einem Bildsensor 12 aufweist. Alternativ kann die Bildaufnahmeeinheit 100 auch mehr als zwei Kameras 11 aufweisen und/oder jede Kamera 11 mehr als einen

Bildsensor 12 aufweisen. Ferner weist jedes Sichtsystem 100 eine Verarbeitungseinheit 20 und eine Wiedergabeeinheit 30 auf. Die Verarbeitungseinheit 20 ist mit der Bildaufnahmeeinheit 10 und der Wiedergabeeinheit 30 gekoppelt. Mitunter kann jede Verarbeitungseinheit 20 mit weiteren Systemkomponenten gekoppelt sein (siehe gestrichelte Linien).

Die Bildaufnahmeeinheit 10 ist zum Aufnehmen von Bildern einer Fahrzeugumgebung in Form von Bilddaten, z.B. Videodaten, angepasst. Die Verarbeitungseinheit 20 verarbeitet bzw. bearbeitet die von der Bildaufnahmeeinheit aufgenommenen Bilddaten derart, dass diese von der Wiedergabeeinheit 30 wiedergeben werden können. Insbesondere bearbeitet die Verarbeitungseinheit die Bilddaten derart, dass der erste Bildausschnitt bei Darstellung auf der Wiedergabeeinheit 30 stets eine größere Auflösung aufweist als der zweite Bildausschnitt bei Darstellung auf der Wiedergabeeinheit 30 (z.B. durch geeignete Skalierung des ersten und zweiten Bildausschnitts). Zusätzlich kann die Verarbeitungseinheit 20 auch Steuersignale ausgeben und empfangen, beispielsweise zu bzw. von der Bildaufnahmeeinheit 10 und/oder der Wiedergabeeinheit 30.

In Fig. 1b ist eine alternative Ausführungsform eines erfindungsgemäßen Sichtsystems 200 gezeigt. Im Unterschied zu dem in Fig. 1a gezeigten Sichtsystem 100 weist das in Fig. 1b gezeigte Sichtsystem 200 lediglich eine Kamera 11 mit einem Bildsensor 12 auf. Die Kamera 11 kann einen einzigen oder mehrere Bildsensoren 12 aufweisen und ist angepasst, einen Sichtbereich um das Fahrzeug herum aufzunehmen, der sowohl ein Hauptsichtfeld und ein Weitwinkelsichtfeld (wie beispielsweise in der ECE R46 definiert) enthält.

Fig. 2 zeigt eine Draufsicht auf ein Fahrzeug 1 mit einer Zugeinheit 2 und einem Anhänger 3. Bei der in Fig. 2 dargestellten Fahrsituation fluchten die Zugeinheit 2 und Anhänger 3 in Längsrichtung des Fahrzeugs 1 im Wesentlichen, wie bei einer Geradeausfahrt oder einer geraden Rückwärtsfahrt (siehe Strich-Punkt-Linie in Fig. 2). Dabei umfasst die Bezeichnung "fluchten im Wesentlichen" kleine Lenkwinkel, die ein Nachführen des Bildausschnitts nicht erfordern.

Fig. 3 zeigt den Aufnahmebereich bzw. Sichtbereich 40 des Bildsensors 12 der Bildaufnahmeeinheit bei der in Fig. 2 gezeigten Fahrsituation, d.h. einer Geradeausfahrt oder einer geraden Rückwärtsfahrt. Wie in Fig. 3 zu sehen ist, ist die Kamera 11 der Sichtsysteme 100, 200 angepasst, einen einzigen gemeinsamen Sichtbereich 40, der der Sensorfläche entspricht, auf der die Umgebung um das Fahrzeug 1 herum aufgenommen wird, aufzunehmen. Mit einem einzigen gemeinsamen Sichtbereich ist ein Sichtbereich gemeint, der sowohl ein Hauptsichtfeld und ein Weitwinkelsichtfeld (wie beispielsweise in der ECE R46 definiert) enthält. D.h. die einzige Kamera nimmt einen einzigen Sichtbereich auf. Bei einer einzigen Kamera 11 mit mehreren Bildsensoren 12 wird der gemeinsame Sichtbereich 40 durch eine geeignete Berechnungssoftware, die die Bilder der Kameras 11 zu einem gemeinsamen Sichtbereich 40 zusammensetzt, generiert. Bei einer einzigen Kamera 11 mit einem einzigen Bildsensor 12 wird der Sichtbereich 40 durch eine geeignete Linsenanordnung als optisches Element generiert, so dass einander sich eigentlich widersprechende Anforderungen, wie beispielsweise eine Weitwinkelabbildung, d.h. eine Abbildung mit großem Bildwinkel, und eine im Wesentlichen verzeichnungsfreie bzw. verzeichnungsarme Abbildung mit hoher Auflösung, wie beispielsweise eine Hauptsichtfeldabbildung, für das gewünschte Sichtfeld gleichzeitig erzielt werden können.

Der Sichtbereich 40 enthält einen ersten Bildausschnitt 410, der wiederum ein gesetzlich vorgeschriebenes Hauptsichtfeld 411 enthält. Ferner enthält der Sichtbereich 40 einen zweiten Bildausschnitt 420, der wiederum ein gesetzlich vorgeschriebenes Weitwinkelsichtfeld 421 enthält. Die Anforderungen an gesetzlich vorgeschriebene Hauptsichtfelder und Weitwinkelsichtfelder sind beispielsweise in der ECE R46 definiert. Wie Fig. 3 entnommen werden kann, umfasst der zweite Bildausschnitt 420 sowohl das gesetzlich vorgeschriebene Weitwinkelsichtfeld 421, den ersten Bildausschnitt 410 und das gesetzlich vorgeschriebene Weitwinkelsichtfeld 421 als auch einen Teil einer Zugeinheit 2 und eines Anhängers 3 des Fahrzeugs 1. Der erste Bildausschnitt 410 befindet sich in der in Fig. 3 dargestellten Fahrsituation, d.h. bei in Längsrichtung fluchtender Zugeinheit 2 und Anhänger 3, an einer ersten ursprünglichen Position A. Der zweite Bildausschnitt 410 befindet sich bei der in Fig. 3 dargestellten Fahrsituation an einer zweiten ursprünglichen Position B.

Der erste Bildausschnitt 410 und das darin enthaltene gesetzlich vorgeschriebene Hauptsichtfeld 411 sowie der zweite Bildausschnitt 420 und das darin enthaltene gesetzlich vorgeschriebene Weitwinkelsichtfeld 421 sind auch in der Draufsicht aus Fig. 2 zu sehen.

Fig. 4 zeigt eine Wiedergabeeinheit 30, die eine rechteckige Form mit einer längeren Erstreckung in einer Oben-Unten-Richtung als in einer Breitenrichtung in Fig. 4 und einen ersten Anzeigebereich 31 und einen zweiten Anzeigebereich 32 aufweist. Der erste Anzeigebereich 31 befindet sich in dem an dem Fahrzeug 1 montierten Zustand der Wiedergabeeinheit 30 oberhalb des zweiten Anzeigebereichs 32 und beansprucht in etwa 2/3 der gesamten Anzeigefläche der Wiedergabeeinheit 30. Der zweite Anzeigebereich 32 liegt damit in dem an dem Fahrzeug 1 montierten Zustand der Wiedergabeeinheit 30 unterhalb des ersten Anzeigebereichs 31 und beansprucht entsprechend etwa 1/3 der gesamten Anzeigefläche der Wiedergabeeinheit 30. In dem ersten Anzeigebereich 31 ist der erste Bildausschnitt 410, der das gesetzlich vorgeschriebene Hauptsichtfeld 411 enthält, wiedergegeben. In dem zweiten Anzeigebereich 32 ist der zweite Bildausschnitt 420, der das gesetzlich vorgeschriebene Weitwinkelsichtfeld 421 enthält, wiedergegeben. Genauer entspricht der erste Bildausschnitt 410 an der ursprünglichen Position A dem ersten Anzeigebereich 31 und der zweite Bildausschnitt 420 an der ursprünglichen Position B entspricht dem zweiten Anzeigebereich 32.

Wie in Fig. 3 gezeigt ist, ist der zweite Bildausschnitt 420 bei Aufnahme durch die Bildaufnahmeeinheit 10 größer als der erste Bildausschnitt 410 bei Aufnahme durch die Bildaufnahmeeinheit 10. Im Gegensatz dazu ist jedoch der erste Bildausschnitt 410 bei einer Darstellung auf der Wiedergabeeinheit 30 größer als der zweite Bildausschnitt 420 bei einer Darstellung auf der Wiedergabeeinheit 30. Der zweite Bildausschnitt 420 bei der Aufnahme wird dazu im Verhältnis zu dem ersten Bildausschnitt 410 bei der Aufnahme größenmäßig von der Verarbeitungseinheit 20 derart verändert bzw. reduziert, dass er bei seiner Wiedergabe kleiner als der Bildausschnitt 410 ist. Durch die Größenreduzierung verringert sich auch die Auflösung des zweiten Bildausschnitts 420. Die Größe des ersten Bildausschnitts 410 kann entweder beibehalten werden oder einem geringeren Maß als der zweite Bildausschnitt 420 reduziert werden. Solange die Mindestanforderungen an die Auflösung eingehalten werden, kann der erste Bildausschnitt 410 auch vergrößert werden. So wird gewährleistet, dass der erste Bildausschnitt 410 bei Darstellung auf der Wiedergabeeinheit 30 stets eine höhere Auflösung aufweist als der zweite Bildausschnitt 420 bei Darstellung auf der Wiedergabeeinheit 30.

Wie in Fig. 4 gezeigt ist, sieht der Fahrer in dem ersten Anzeigebereich 31 einen Teil der Zugeinheit 2 und die hintere Kante des Anhängers 3 (mit einem Referenzpunkt P auf der hinteren Kante des Anhängers 3) und kann so zuverlässig die Umgebung um das Fahrzeug, insbesondere den Anhänger einschätzen.

Beginnt sich der Anhänger 3 des Fahrzeugs 1 aus der in Längsrichtung mit der Zugeinheit 2 fluchtenden Anordnung während eines Fahrmanövers, wie beispielsweise einer Kurvenfahrt oder eines Abbiegevorgangs, heraus in eine zu der Zugeinheit winklige Anordnung zu bewegen, wird der erste Bildausschnitt 410 von der Verarbeitungseinheit 20 derart verschoben, dass der Referenzpunkt P nach wie vor in dem ersten Bildausschnitt zu sehen ist. Damit die Verarbeitungseinheit 20 nicht bei kleinen Lenkbewegungen des Fahrers, die üblicherweise mit einer Geradausfahrt oder einer geraden Rückwärtsfahrt einhergehen, um beispielsweise die Spur zu halten, beginnt, den ersten Bildausschnitt 410 zu verschieben, erfolgt ein Verschieben des ersten Bildausschnitts 410 durch die Verarbeitungseinheit 20 erst ab einem bestimmten, fest definierten Winkel zwischen Anhänger 3 und Zugeinheit 2. Alternativ oder zusätzlich ist es auch denkbar, dass die Verarbeitungseinheit 20 mit einem bestimmten fest definierten zeitlichen Verzug beginnt, den ersten Bildausschnitt 410 zu verschieben, d.h. wenn der Anhänger 3 und die Zugeinheit 2 auch nach Ablauf einer gewissen Zeitspanne nicht erneut die zueinander fluchtende Ausrichtung eingenommen haben.

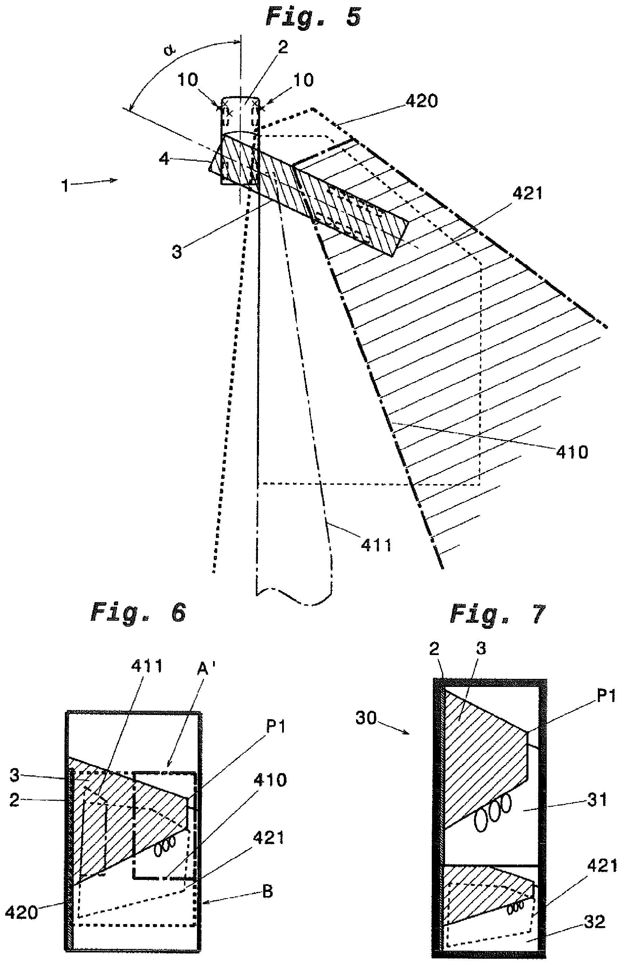

Fig. 5 zeigt eine Draufsicht auf das Fahrzeug 1, bei dem die Zugeinheit 2 und Anhänger 3 nicht länger in Längsrichtung des Fahrzeugs 1 fluchten, sondern winklig zueinander angeordnet sind, wie bei einer Kurvenfahrt oder einem Abbiegevorgang des Fahrzeugs 1. Genauer ist der Anhänger 3 in einem Winkel α zu der Zugeinheit 2 angeordnet. Bevorzugt beginnt ein Verschieben eines entsprechenden Bildausschnitts nicht vor Erreichen eines bestimmten Winkels a, wie beispielsweise nicht bevor α ≥ 30°, bevorzugt α ≥ 20°, weiter bevorzugt α ≥ 10° und noch weiter bevorzugt α ≥ 5°.

Fig. 6 zeigt den Aufnahmebereich bzw. Sichtbereich 40 des Bildsensors 11 der Bildaufnahmeeinheit 10 bei der in Fig. 5 gezeigten Fahrsituation, d.h. bei einer Kurvenfahrt oder einem Abbiegevorgang. Wie in Fig. 3 weist der Sichtbereich 40 den ersten Bildausschnitt 410 und den zweiten Bildausschnitt 420 auf. Jedoch befindet sich bei der Fig. 6 zugrunde liegenden Fahrsituation, d.h. einer Kurvenfahrt oder einem Abbiegevorgang, der erste Bildausschnitt 410 an einer ersten modifizierten Position A', während sich der zweite Bildausschnitt 410 nach wie vor an der zweiten ursprünglichen Position B befindet. Mit anderen Worten ist der erste Bildausschnitt 410 bei der Fig. 6 zugrunde liegenden Fahrsituation von der Verarbeitungseinheit 20 an einer anderen Stelle dem Sichtbereich 40 entnommen bzw. zu dieser anderen Stelle durch Einnehmen einer Vielzahl von Zwischenpositionen kontinuierlich verschoben als bei der Fig. 3 zugrunde liegenden Fahrsituation. Genauer ist in Fig. 6 zu sehen, dass der erste Bildausschnitt 410 derart an einer Position A' dem Sichtbereich 40 entnommen ist, dass der erste Bildausschnitt 410 die hintere Kante des Anhängers 3 und damit den Referenzpunkt P enthält. Der Referenzpunkt P ermöglicht dem Fahrer eine Einordnung des Anhängers 3 in dessen Umgebung und eine Einschätzung, wie groß der Winkel α zwischen Zugeinheit 2 und Anhänger 3 ist. Der in Fig. 6 gezeigte erste Bildausschnitt 410 enthält an der Position A' nicht länger das gesetzlich vorgeschriebene Hauptsichtfeld 411, sondern nur der zweite Bildausschnitt 420, der sich auch bei der Fig. 6 zugrunde liegenden Fahrsituation noch an der ursprünglichen Position B befindet, enthält weiterhin das gesetzlich vorgeschriebene Weitwinkelsichtfeld 412.

Fig. 7 zeigt die in Fig. 4 beschriebene Wiedergabeeinheit 30 mit dem ersten Anzeigebereich 31 und dem zweiten Anzeigebereich 32. Wie auch in Fig. 4 gezeigt, befindet sich in Fig. 7 der erste Anzeigebereich 31 in dem an dem Fahrzeug 1 montierten Zustand oberhalb des zweiten Anzeigebereichs 32 und beansprucht in etwa 2/3 der gesamten Anzeigefläche der Wiedergabeeinheit 30, und der zweite Anzeigebereich 32 beansprucht entsprechend etwa 1/3 der gesamten Anzeigefläche der Wiedergabeeinheit 30 unterhalb des ersten Anzeigebereichs 31. Im Unterschied zu der in Fig. 4 gezeigten Wiedergabeeinheit 30 ist bei der in Fig. 7 gezeigten Wiedergabeeinheit 30 der erste Bildausschnitt 410 an der modifizierten Position A' wiedergegeben, nicht jedoch das gesetzlich vorgeschriebene Hauptsichtfeld 411. In dem zweiten Anzeigebereich 32 ist, wie in Fig. 4, der zweite Bildausschnitt 420, der das gesetzlich vorgeschriebene Hauptsichtfeld 421 enthält, wiedergegeben. Genauer entspricht der erste Bildausschnitt 410 an der modifizierten Position A' dem ersten Anzeigebereich 31 und der zweite Bildausschnitt 420 entspricht dem zweiten Anzeigebereich 32.

Es ist auch denkbar, dass nur der zweite Bildausschnitt 420 verschoben wird oder beide Bildausschnitte 410, 420 verschoben werden. Unabhängig davon, welcher der Bildausschnitte 410, 420 verschoben wird und wie weit er verschoben wird, muss stets gewährleistet sein, dass der erste Bildausschnitt 410 auf der Wiedergabeeinheit 30 mit einer höheren Auflösung dargestellt wird als der zweite Bildausschnitt 420. Die kann wie oben beschrieben durch geeignete Skalierung des ersten und/oder des zweiten Bildausschnitts 410, 420 erfolgen.

Die Verarbeitungseinheit 20 erhält bevorzugt ein Steuersignal aus einer Signaleinrichtung (nicht gezeigt), um der Verarbeitungseinheit 20 anzuzeigen, dass sich der Anhänger 3 aus der zu der Zugeinheit 2 fluchtenden Anordnung in die winklige Anordnung bewegt. Die Signaleinrichtung kann eine vom Fahrer manuell zu betätigende Signaleinrichtung, wie ein Touchpad/Touch-screen, ein Türbedienfeld, etc., sein. Bemerkt der Fahrer, dass er nicht länger das die Umgebung um das Fahrzeug herum, insbesondere um den Anhänger herum, und damit einen für ihn relevanten und vorher festgelegten Referenzpunkt sieht, kann er somit mittels einer manuellen Eingabe der Verarbeitungseinheit 20 signalisieren, den betreffenden Bildausschnitt 410, 420 entsprechend zu verschieben, so dass er die Umgebung um den Anhänger herum und den Referenzpunkt wieder sieht. In diesem Fall gibt der Fahrer den Umfang der Verschiebung vor. Alternativ oder zusätzlich kann die Signaleinrichtung eine automatische Signaleinrichtung, wie ein Lenkwinkelsensor, ein Positionssensor, etc. sein. Die automatische Signaleinrichtung detektiert ständig, ob sich der Anhänger 3 noch in zu der Zugeinheit 2 fluchtender Anordnung befindet. Sobald automatische Signaleinrichtung eine winklige Anordnung zwischen Anhänger 3 und Zugeinheit 2 ermittelt, gibt sie ein Signal an die Verarbeitungseinheit 20 aus, das auch eine Information enthält, wie groß der Winkel zwischen Anhänger 3 und Zugeinheit 2 ist, so dass die Verarbeitungseinheit 20 den entsprechenden Bildausschnitt 410, 420 an eine Position A' verschieben kann bzw. an einer Position A' dem Sichtbereich 40 entnehmen kann, die es dem Fahrer ermöglicht, den Referenzpunkt P am Anhänger 3 zu sehen.

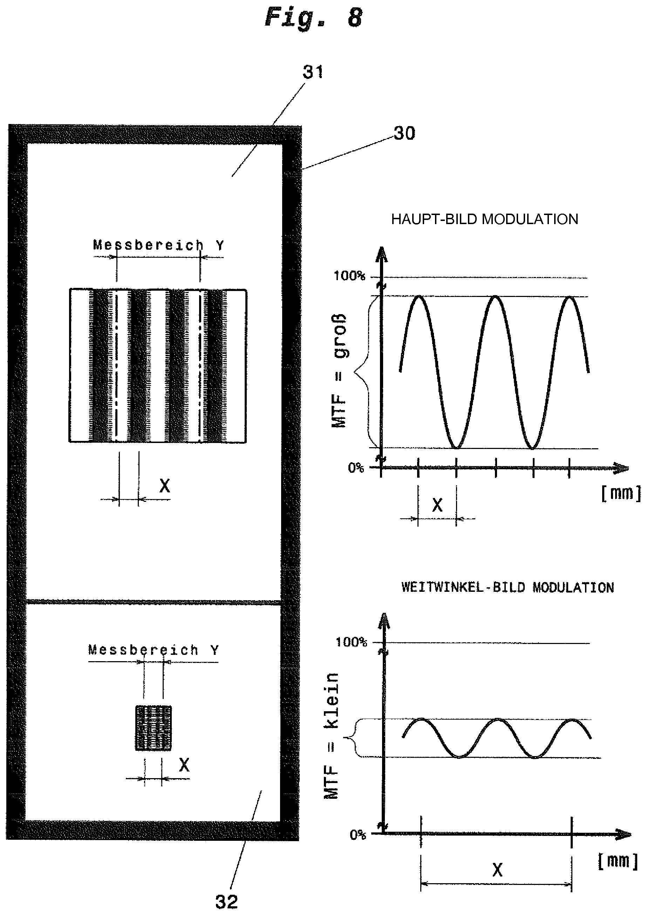

Fig. 8 zeigt eine Wiedergabeeinheit 30 mit einem ersten und einem zweiten Anzeigebereich 31, 32, wie sie bereits in Bezug auf Fig. 4 und 7 beschrieben wurden. In dem ersten Anzeigebereich 31 ist ein Hauptsichtfeld schematisch mittels eines Linienrasters (Graustufen wiedergegeben durch kurze in der Fig. 8 in der Rechts-Links-Richtung verlaufende Stricke an den schwarzen Linien) wiedergegeben, wie es bei einer Modulationsübertragungsfunktion (Modulation Transfer Function, MTF) verwendet wird. Das Linienraster stellt den Objektkontrast dar. In dem zweiten Anzeigebereich 32 ist ein Weitwinkelsichtfeld schematisch mittels eines Linienrasters wiedergegeben. In beiden Linienrastern ist ein Messbereich Y definiert, der stets vier Linien umfasst. Innerhalb des Messbereichs Y ist jeweils ein Messwert X festgelegt, der bei der Hauptsichtfelddarstellung und der Weitwinkelsichtfelddarstellung einen identischen Betrag aufweist. Bei dem in dem ersten Anzeigebereich 31 gezeigten Linienraster für ein Hauptsichtfeld entspricht der Messwert X der Breite einer Linie, während bei dem in dem zweiten Anzeigebereich 32 gezeigten Linienraster für ein Weitwinkelsichtfeld der Messwert X der Breite von vier Linien und damit dem Messbereich Y entspricht. Die Linien sowohl des Linienrasters des Hauptsichtfelds in dem Anzeigebereich 31 als auch des Weitwinkelsichtfelds in dem Anzeigebereich 32 verlaufen in der Bildebene von Fig. 8 oben nach unten und weisen feste Abstände auf.

Die Modulationsübertragungsfunktion MTF ist ein Bewertungskriterium für inkohärente Abbildungen. Genauer ist die Modulationsübertragungsfunktion ein Maß für die Schärfe bzw. den Kontrast der Abbildung und ist definiert als das Verhältnis von Bildkontrast zu Objektkontrast oder das Verhältnis von realem Bildkontrast zu idealem Bildkontrast.

Rechts neben der Hauptsichtfelddarstellung und der Weitwinkelsichtfelddarstellung ist das jeweilige Linienraster in einer sinusförmigen Bildmodulation abgebildet. Die sinusförmige Bildmodulation stellt den Bildkontrast dar. Wie der jeweils dem Hauptsichtfeld bzw. dem Weitwinkelsichtfeld zugeordneten sinusförmigen Bildmodulationen entnommen werden kann, ist das Verhältnis von Bildkontrast zu Objektkontrast bei dem Hauptsichtfeld größer (hohe Amplitude bei geringer Wellenlänge) als bei dem Weitwinkelsichtfeld (geringe Amplitude bei großer Wellenlänge). Der Messwert X bei der sinusförmigen Bildmodulation des Hauptsichtfelds umfasst somit eine Erstreckung von genau eine halbe Wellenlänge, während der Messwert X bei der sinusförmigen Bildmodulation des Weitwinkelsichtfelds genau zwei Wellenlängen umfasst. Der Abstand zwischen den Linienpaaren des Linienrasters des Hauptsichtfelds ist somit geringer als der Abstand zwischen den Linienpaaren des Linienrasters des Weitwinkelsichtfelds, weswegen das Hauptsichtfeld stets eine höhere Auflösung als das Weitwinkelsichtfeld aufweist.

Die in Figur 8 gezeigte Modulationsübertragungsfunktion ist eine von vielen Arten, die Auflösung eines Bildes zu beschreiben bzw. zu definieren und ist vorliegend die bevorzugte Art der Beschreibung. Selbstverständlich sind aber auch andere Auflösungsarten denkbar, wie beispielsweise die Angabe der Pixel pro definierter Abbildungsfläche.

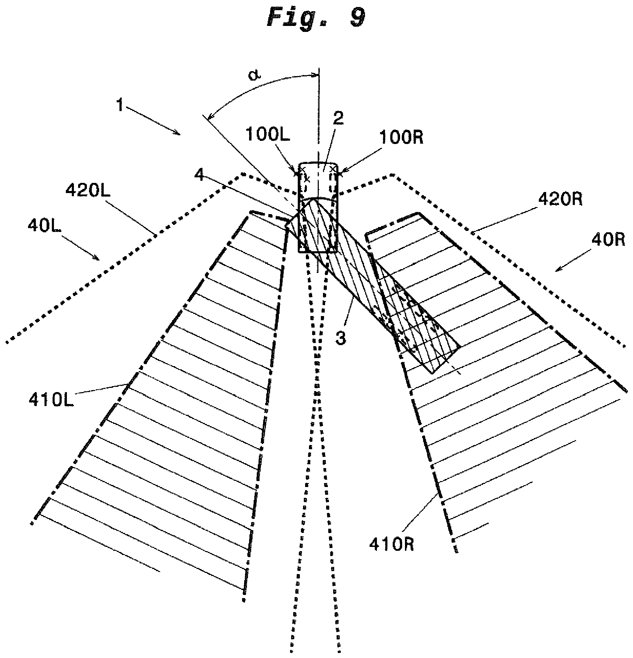

Fig. 9, wie Fig. 5, zeigt eine Draufsicht auf das Fahrzeug 1, bei dem die Zugeinheit 2 und Anhänger 3 nicht länger in Längsrichtung des Fahrzeugs 1 fluchten, sondern winklig zueinander angeordnet sind, wie bei einer Kurvenfahrt oder einem Abbiegevorgang des Fahrzeugs 1. Genauer ist der Anhänger 3 in einem Winkel α zu der Zugeinheit 2 angeordnet. Ferner ist bei der in Fig. 9 gezeigten Ausführungsform ein Sichtsystem 100L an einer in Hauptfahrtrichtung linken Außenseite der Zugeinheit 2 und ein Sichtsystem 100R an einer in Hauptfahrtrichtung rechten Außenseite der Zugeinheit 2 angeordnet. Die Sichtsysteme 100L, 100R entsprechen dem Sichtsystem 100, können aber auch dem Sichtsystem 200 entsprechen. Die beiden Sichtsysteme 100L, 100R sind derart ausgebildet, dass sie untereinander Daten austauschen können, wie beispielsweise Bilddaten, Steuerbefehle, etc.

Das Sichtsystem 100L nimmt einen Sichtbereich 40L der Umgebung auf einer in Hauptfahrtrichtung linken Seite des Fahrzeugs 1 auf. Der Sichtbereich 40L enthält ein Weitwinkelsichtfeld 420L und ein Hauptsichtfeld 410L. Das Sichtsystem 100R nimmt einen Sichtbereich 40R der Umgebung auf einer in Hauptfahrtrichtung rechten Seite des Fahrzeugs 1 auf. Der Sichtbereich 40R enthält ein Weitwinkelsichtfeld 420R und ein Hauptsichtfeld 410R.

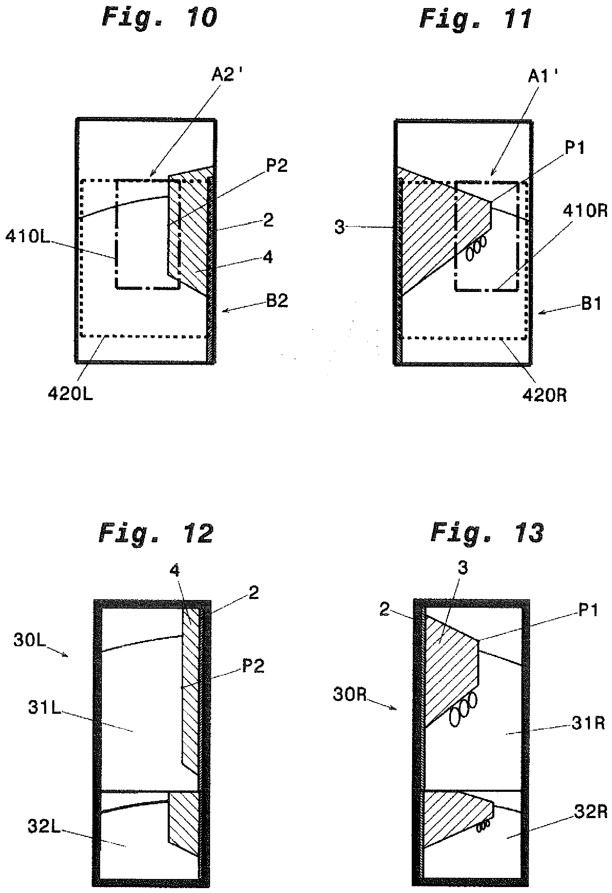

Fig. 10 zeigt den Aufnahmebereich bzw. Sichtbereich 40L des Bildsensors des Sichtsystems 100L bei der in Fig. 9 gezeigten Fahrsituation, d.h. bei einer Kurvenfahrt oder einem Abbiegevorgang. Wie in Fig. 9 gezeigt, weist der Sichtbereich 40L den ersten Bildausschnitt 410L und den zweiten Bildausschnitt 420L auf. Jedoch befindet sich bei der Fig. 10 zugrunde liegenden Fahrsituation, d.h. einer Kurvenfahrt oder einem Abbiegevorgang, der erste Bildausschnitt 410L an einer ersten modifizierten Position A2', während sich der zweite Bildausschnitt 420L einer zweiten ursprünglichen Position B2 befindet. Mit anderen Worten ist der erste Bildausschnitt 410L bei der Fig. 10 zugrunde liegenden Fahrsituation von der Verarbeitungseinheit des Sichtsystems 100L an einer anderen Stelle dem Sichtbereich 40L entnommen bzw. zu dieser anderen Stelle A2' durch Einnehmen einer Vielzahl von Zwischenpositionen kontinuierlich verschoben als bei einer Fahrsituation, bei der Zugeinheit 2 und Anhänger 3 im Wesentlichen fluchten. Genauer ist in Fig. 10 zu sehen, dass der erste Bildausschnitt 410L derart an einer Position A2' dem Sichtfeld 40L entnommen ist, dass der erste Bildausschnitt 410L eine Teil einer Stirnfläche 4 des Anhängers 3 (die Fläche des Anhängers, die in einer im Wesentlichen fluchtenden Anordnung auf die Zugeinheit 2 gerichtet ist) und einen Referenzpunkt P2 enthält. Der Referenzpunkt P2 ist vorliegend etwa mittig auf einer in Hauptfahrtrichtung linken Kante der Stirnfläche 4 positioniert, kann aber auch an jeder anderen Stelle der Stirnfläche 4 positioniert sein. Der Referenzpunkt P2 ermöglicht dem Fahrer eine Einordnung des Anhängers 3 in dessen linken Umgebung und eine Einschätzung, wie groß der Winkel α zwischen Zugeinheit 2 und Anhänger 3 ist. Wie in den oben beschriebenen Ausführungsformen enthält der in Fig. 10 gezeigte erste Bildausschnitt 410L an der Position A2' nicht länger ein (nicht eingezeichnetes) Hauptsichtfeld, sondern nur der zweite Bildausschnitt 420L, der sich auch bei der Fig. 10 zugrunde liegenden Fahrsituation noch an der ursprünglichen Position B2 befindet, enthält weiterhin ein (nicht eingezeichnetes) Weitwinkelsichtfeld.

Fig. 11 zeigt den Aufnahmebereich bzw. Sichtbereich 40R des Bildsensors des Sichtsystems 100R bei der in Fig. 9 gezeigten Fahrsituation, d.h. bei einer Kurvenfahrt oder einem Abbiegevorgang. Wie in Fig. 9 gezeigt, weist der Sichtbereich 40R den ersten Bildausschnitt 410R und den zweiten Bildausschnitt 420R auf. Jedoch befindet sich bei der Fig. 11 zugrunde liegenden Fahrsituation, d.h. einer Kurvenfahrt oder einem Abbiegevorgang, der erste Bildausschnitt 410R an einer ersten modifizierten Position A1', während sich der zweite Bildausschnitt 420R einer zweiten ursprünglichen Position B1 befindet. Mit anderen Worten ist der erste Bildausschnitt 410R bei der Fig. 11 zugrunde liegenden Fahrsituation von der Verarbeitungseinheit des Sichtsystems 100R an einer anderen Stelle dem Sichtbereich 40R entnommen bzw. zu dieser anderen Stelle A1' durch Einnehmen einer Vielzahl von Zwischenpositionen kontinuierlich verschoben als bei einer Fahrsituation, bei der Zugeinheit 2 und Anhänger 3 im Wesentlichen fluchten. Genauer ist in Fig. 11 zu sehen, dass der erste Bildausschnitt 410R derart an einer Position A1' dem Sichtfeld 40R entnommen ist, dass der erste Bildausschnitt 410R einen Teil einer in Hauptfahrtrichtung hinteren Kante des Anhängers 3 und einen Referenzpunkt P1 enthält. Der Referenzpunkt P1 ist vorliegend an einer oberen Ecke der hinteren Kante angeordnet, kann aber auch an jeder anderen Stelle der hinteren Kante des Anhängers 3 oder einer anderen Referenzposition positioniert sein. Der Referenzpunkt P1 ermöglicht dem Fahrer eine Einordnung des Anhängers 3 in dessen rechter Umgebung und eine Einschätzung, wie groß der Winkel α zwischen Zugeinheit 2 und Anhänger 3 ist. Wie in den oben beschriebenen Ausführungsformen enthält der in Fig. 11 gezeigte erste Bildausschnitt 410R an der Position A1' nicht länger ein (nicht eingezeichnetes) Hauptsichtfeld, sondern nur der zweite Bildausschnitt 420R, der sich auch bei der Fig. 11 zugrunde liegenden Fahrsituation noch an der ursprünglichen Position B1 befindet, enthält weiterhin ein (nicht eingezeichnetes) Weitwinkelsichtfeld.

Fig. 12 zeigt eine eine linke Fahrzeugumgebung wiedergebende Wiedergabeeinheit 30L mit einem ersten Anzeigebereich 31L und einem zweiten Anzeigebereich 32L. Die Wiedergabeeinheit 30L entspricht der oben beschriebenen Wiedergabeeinheit 30. Bei der in Fig. 12 gezeigten Wiedergabeeinheit 30L entspricht der erste Bildausschnitt 410L an der modifizierten Position A2' dem Anzeigebereich 31L und der zweite Bildausschnitt 420L entspricht dem zweiten Bildausschnitt 420L an der ursprünglichen Position B2.

Fig. 13 zeigt eine eine rechte Fahrzeugumgebung wiedergebende Wiedergabeeinheit 30R mit einem ersten Anzeigebereich 31R und einem zweiten Anzeigebereich 32R. Die Wiedergabeeinheit 30R entspricht der oben beschriebenen Wiedergabeeinheit 30. Bei der in Fig. 13 gezeigten Wiedergabeeinheit 30R entspricht der erste Bildausschnitt 410R an der modifizierten Position A1' dem Anzeigebereich 31R und der zweite Bildausschnitt 420R entspricht dem zweiten Bildausschnitt 420R an der ursprünglichen Position B1.

Die linke und rechte Fahrzeugumgebung können auch in einer gemeinsamen Wiedergabeeinheit 30 dargestellt werden.

In der in Fig. 9 bis 13 gezeigten Ausführungsform verschiebt sowohl das linke als auch das rechte Sichtsystem 100L, 100R den ersten Bildausschnitt 410L, 410R derart, dass auch bei Ausscheren des Anhängers 3 relativ zur Zugeinheit 2 jeweils die Umgebung auf der linken und rechten Seite um das Fahrzeug herum von dem Fahrer eingesehen werden kann. Es ist aber auch denkbar, dass nur der erste linke Bildausschnitt 410L oder der erste rechte Bildausschnitt 410R oder drei der ersten und zweiten Bildausschnitte 410L, 410R, 420L, 420R oder alle ersten und zweiten Bildausschnitte 410L, 410R, 420L, 420R verschoben werden.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 1: Fahrzeug
- 2: Zugeinheit
- 3: Anhänger
- 4: Anhängerstirnfläche
- 10: Bildaufnahmeeinheit
- 11: Kamera
- 12: Bildsensor
- 20: Verarbeitungseinheit
- 30, 30L, 30R: Wiedergabeeinheit
- 31, 31L, 31R: erster Anzeigebereich
- 32, 31L, 32R: zweiter Anzeigebereich
- 40, 40L, 40R: Sichtbereich
- 410, 410L, 410R: erster Bildausschnitt
- 411: erstes gesetzlich vorgeschriebenes Sichtfeld, Hauptsichtfeld
- 420, 420L, 420R: zweiter Bildausschnitt
- 421: zweites gesetzlich vorgeschriebenes Sichtfeld, Weitwinkelsichtfeld
- 100, 100L, 100R, 200: Sichtsystem
- A, A1, A2: erste ursprüngliche Position
- A', A1', A2': erste modifizierte Position
- B, B1, B2: zweite ursprüngliche Position
- P, P1, P2: Referenzpunkt
- α: Winkel zwischen Zugeinheit und Anhänger
- X: MTF-Messwert
- Y: MTF-Messbereich

## Patentansprüche

1. Sichtsystem (100, 200) für ein Fahrzeug (1) mit einer Zugeinheit (2) und einem Anhänger (3), enthaltend:
eine Aufnahmeeinheit (10) mit wenigstens einem Bildsensor (12) zum Aufnehmen eines Sichtbereichs (40) um das Fahrzeug herum in Form von Bilddaten, wobei die Aufnahmeeinheit (10) an der Zugeinheit (2) anbringbar ist,
wenigstens eine Verarbeitungseinheit (20) zum Verarbeiten der von der Aufnahmeeinheit (10) aufgenommenen Bilddaten, und
wenigstens eine Wiedergabeeinheit (30) zur Wiedergabe wenigstens eines ersten Bildausschnitts (410) und eines zweiten Bildausschnitts (420) des von der Aufnahmeeinheit (10) aufgenommenen Sichtbereichs (40),
wobei, wenn die Zugeinheit (2) und der Anhänger (3) in Längsrichtung des Fahrzeugs (1) miteinander im Wesentlichen fluchten, die Verarbeitungseinheit (20) dem Sichtbereich (40) des wenigstens einen Bildsensors (12) den ersten Bildausschnitt (410) an einer ersten ursprünglichen Position (A) und den zweiten Bildausschnitt (420) an einer zweiten ursprünglichen Position (B) entnimmt, und
wobei, wenn die Zugeinheit (2) und der Anhänger (3) in einem Winkel im Wesentlichen ungleich 0° zueinander angeordnet sind, die Verarbeitungseinheit (20) dem Sichtbereich (40) des wenigstens einen Bildsensors (12) den ersten Bildausschnitt (410) an einer ersten modifizierten Position (A') und/oder den zweiten Bildausschnitt (420) an einer zweiten modifizierten Position entnimmt, und
wobei die Auflösung des ersten Bildausschnitts (410) an der ursprünglichen Position (A) und an der modifizierten Position (A') auf der Wiedergabeeinheit (30) höher ist als die Auflösung des zweiten Bildausschnitts (420) an der ursprünglichen Position (B) und an der modifizierten Position auf der Wiedergabeeinheit (30), wobei die Bildaufnahmeeinheit (10) eine einzige Kamera (11) aufweist, wobei die einzige Kamera (11) einen einzigen Bildsensor (12) aufweist.

2. Sichtsystem (100, 200) nach Anspruch 1, wobei der erste Bildausschnitt (410) ein Hauptsichtfeld und/oder der zweite Bildausschnitt (420) ein Weitwinkelsichtfeld enthält, wobei das Hauptsichtfeld bevorzugt ein erstes gesetzlich vorgeschriebenes Sichtfeld (411) und/oder das Weitwinkelsichtfeld ein zweites gesetzlich vorgeschriebenes Sichtfeld (421) enthält.

3. Sichtsystem (100, 200) nach einem der vorangehenden Ansprüche, wobei der erste Bildausschnitt (410) auf dem Sichtbereich (40) des Bildsensors (12) derart positioniert und orientiert ist, dass er an der ersten ursprünglichen Position (A) einen Teil der Zugeinheit (2) abbildet, und/oder wobei der erste Bildausschnitt (410) an der ursprünglichen Position (A) und der erste Bildausschnitt (410) an der modifizierten Position (A') einen Referenzpunkt (P) des Anhängers aufweist, wobei sich der Referenzpunkt (P) bevorzugt innerhalb des ersten Bildausschnitts (410) an der ersten ursprünglichen Position (A) und an der ersten modifizierten Position (A') an derselben Stelle des ersten Bildausschnitts (410) befindet.

4. Sichtsystem (100, 200) nach einem der vorangehenden Ansprüche, wobei sich der erste Bildausschnitt (410) und der zweite Bildausschnitt (420) auf dem Bildsensor (12) teilweise überschneiden.

5. Sichtsystem (100, 200) nach einem der vorangehenden Ansprüche, wobei die Wiedergabeeinheit (30) einen definierten ersten Anzeigebereich (31) zur Wiedergabe des ersten Bildausschnitts (410) an der ersten ursprünglichen Position (A) und einen definierten zweiten Anzeigebereich (32) zur Wiedergabe des zweiten Bildausschnitts (420) an der zweiten ursprünglichen Position (B) aufweist, wobei das Verhältnis der Größe des ersten definierten Anzeigebereichs (31) zu der Größe des zweiten definierten Anzeigebereichs (32) bevorzugt unveränderlich ist.

6. Sichtsystem (100, 200) nach einem der vorangehenden Ansprüche, wobei der Bereich, der durch den ersten Bildausschnitt (410) und/oder den zweiten Bildausschnitt (420) an der modifizierten Position (A') abgebildet wird, näher an oder weiter weg von der Zugeinheit (2) angeordnet ist als der Bereich, der durch den ersten Bildausschnitt (410) und/oder den zweiten Bildausschnitt (420) an der ursprünglichen Position (A, B) abgebildet wird.

7. Sichtsystem (100, 200) nach Anspruch 5 oder 6, wobei die Größe des ersten Bildausschnitts (410) und/oder die Größe des zweiten Bildausschnitts (420) an der modifizierten Position (A') gleich der Größe des ersten Bildausschnitts (410) und/oder der Größe des zweiten Bildausschnitts (420) an der ursprünglichen Position (A, B) ist.

8. Sichtsystem (100, 200) nach Anspruch 6, wobei das Seitenverhältnis des ersten Bildausschnitts (410) und/oder das Seitenverhältnis des zweiten Bildausschnitts (420) an der modifizierten Position (A') gleich dem Seitenverhältnis des ersten Bildausschnitts (410) und/oder dem Seitenverhältnis des zweiten Bildausschnitts (420) an der ursprünglichen Position (A, B) ist.

9. Sichtsystem (100, 200) nach Anspruch 5, wobei der erste Anzeigebereich (31) angepasst ist, den ersten Bildausschnitt (410) gleichzeitig an der ursprünglichen und der modifizierten Position wiederzugeben, und der zweite Anzeigebereich (32) angepasst ist, den zweiten Bildausschnitt (420) wiederzugeben, wobei der ersten Bildausschnitt (410) an der ursprünglichen Position bevorzugt eine in Richtung horizontal senkrecht zur Fahrzeuglängsachse veränderte Skalierung aufweist als der erste Bildausschnitt (410) an der modifizierten Position.

10. Sichtsystem (100, 200) nach einem der vorangehenden Ansprüche, wobei die Verarbeitungseinheit (20) angepasst ist, Signale zum Beschreiben des Winkelverhältnisses zwischen der Zugeinheit (2) und dem Anhänger (3) einer am Fahrzeug (1) montierten Signaleinrichtung zu empfangen und den ersten Bildausschnitt (410) und/oder den zweiten Bildausschnitt (420) basierend auf dem Steuersignal an der modifizierten ersten und/oder zweiten Position zu entnehmen oder nicht, wobei die Signaleinrichtung zur Erzeugung eines manuellen Steuersignals bevorzugt angepasst ist, und/oder wobei die Signaleinrichtung einen Fahrzeugsensor enthält, der zur Erzeugung des Steuersignals angepasst ist.

11. Sichtsystem (100, 200) nach einem der vorangehenden Ansprüche, wobei die Verarbeitungseinheit (20) den ersten und zweiten Bildausschnitt (410, 420) an der ersten bzw. zweiten modifizierten Position (A') basierend auf dem Steuersignal kontinuierlich an die Betriebssituation des Fahrzeugs (1) anpasst.

12. Sichtsystem (100, 200) nach Anspruch 11, wobei die Betriebssituation eine Kurvenfahrt ist.

13. Sichtsystem-Anordnung mit zwei Sichtsystemen (100L, 100R) nach einem der Ansprüche 1 bis 12, wobei Verarbeitungseinheiten (20) der beiden Sichtsysteme (100L, 100R) angepasst sind, Daten auszutauschen.

14. Spiegelersatzsystem für ein Fahrzeug mit einem Sichtsystem (100, 200) nach einem der Ansprüche 1 bis 12 oder mit einer Sichtsystem-Anordnung nach Anspruch 13.

## Claims

1. View system (100, 200) for a vehicle (1) with a tractor (2) and a trailer (3), comprising:
a capture unit (10) with at least one image sensor (12) for capturing an area of view (40) around the vehicle in form of image data, wherein the capture unit (10) is attachable to the tractor (2),
at least one processing unit (20) for processing the image data captured by the capture unit (10), and
at least one reproduction unit (30) for reproducing at least one first image section (410) and one second image section (420) of the area of view (40) captured by the capture unit (10),
wherein, if the tractor (2) and the trailer (3) are substantially aligned in the longitudinal direction of the vehicle (1), the processing unit (20) takes the first image section (410) at a first original position (A) and the second image section (420) at a second original position (B) from the area of view (40) of the at least one image sensor (12), and
wherein, if the tractor (2) and the trailer (3) are arranged in an angle substantially unequal 0° to each other, the processing unit (20) takes the first image section (410) at a first modified position (A') and/or the second image section (42) at a second modified position from the area of view (40) of the at least one image sensor (12), and
wherein the resolution of the first image section (410) at the original position (A) and at the modified position (A') on the reproduction unit (30) is higher than the resolution of the second image section (420) at the original position (B) and at the modified position on the reproduction unit (30), wherein the image capture unit (10) has a single camera (11), wherein the single camera (11) has a single image sensor (12).

2. View system (100, 200) according to claim 1, wherein the first image section (410) comprises a main field of view and/or the second image section (420) comprises a wide angle field of view, wherein preferably the main field of view comprises a first legally prescribed field of view (411) and/or the wide angle field of view comprises a second legally prescribed field of view (421).

3. View system (100, 200) according to any one of the preceding claims, wherein the first image section (410) is positioned and oriented on the area of view (40) of the image sensor (12) such that it depicts a part of the tractor (2) at the first original position (A), and/or wherein the first image section (410) at the original position (A) and the first image section (410) at the modified position (A') has a reference point (P) of the trailer, wherein preferably the reference point (P) is disposed within the first image section (410) at the first original position (A) and at the first modified position (A') at the same location of the first image section (410).

4. View system (100, 200) according to any one of the preceding claims, wherein the first image section (410) and the second image section (420) intersect each other partially on the image sensor (12).

5. View system (100, 200) according to any one of the preceding claims, wherein the reproduction unit (30) has a defined first display portion (31) for reproduction the first image section (410) at the first original position (A) and a defined second display portion (32) for reproduction of the second image section (420) at the second original position (B), wherein the ratio of the size of the first defined display portion (31) to the size of the second defined display portion (32) is preferably unchangeable.

6. View system (100, 200) according to any one of the preceding claims, wherein the portion which is depicted by the first image section (410) and/or the second image section (420) at the modified position (A') is arranged closer to or farther away from the tractor (2) than the portion which is depicted by the first image section (410) and/or the second image section (420) at the original position (A, B).

7. View system (100, 200) according to claim 5 or 6, wherein the size of the first image section (410) and/or the size of the second image section (420) at the modified position (A') is equal to the size of the first image section (410) and/or the size of the second image section (420) at the original position (A, B).

8. View system (100, 200) according to claim 6, wherein the aspect ratio of the first image section (410) and/or the aspect ratio of the second image section (420) at the modified position (A') is equal to the aspect ratio of the first image section (410) and/or the aspect ratio of the second image section (420) at the original position (A, B).

9. View system (100, 200) according to claim 5, wherein the first display portion (31) is adapted to reproduce the first image section (410) simultaneously at the original and the modified position, and the second display portion (32) is adapted to reproduce the second image section (420), wherein the first image section (410) at the original position preferably has a scaling which is changed in a direction horizontally orthogonal to the vehicle longitudinal axis in view of the first image section (410) at the modified position.

10. View system (100, 200) according to any one of the preceding claims, wherein the processing unit (20) is adapted to receive signals for describing the angle ratio between the tractor (2) and the trailer (3) from a signal device which is mounted on the vehicle (1) and to take the first image section (410) and/or the second image section (420) based on the control signal at the modified first and/or second position or not, wherein the signal device is preferably adapted for generating a manual control signal, and/or wherein the signal device comprises a vehicle sensor which is adapted for generation of the control signal.

11. View system (100, 200) according to any one of the preceding claims, wherein the processing unit (20) continuously adapts the first and second image section (410, 420) at the first and second modified position (A') to the operational situation of the vehicle (1) based on the control signal.

12. View system (100, 200) according to claim 11, wherein the operational situation is cornering.

13. View system arrangement with two view systems (100L, 100R) according to any one of claims 1 to 12, wherein processing devices (20) of the two view systems (100L, 100R) are adapted to exchange data.

14. Mirror replacement system for a vehicle with a view system (100, 200) according to any one of claims 1 to 12 or with a view system arrangement according to claim 13.

## Revendications

1. Système de visualisation (100, 200) pour un véhicule (1) avec une unité de traction (2) et une remorque (3), contenant :
une unité de capture (10) avec au moins un capteur d'image (12) pour la capture d'une zone de visualisation (40) autour du véhicule sous la forme de données d'image, dans lequel l'unité de capture (10) peut être montée au niveau de l'unité de traction (2),
au moins une unité de traitement (20) pour le traitement des données d'image reçues par l'unité de capture (10), et
au moins une unité de restitution (30) pour la restitution d'au moins une première section d'image (410) et d'une seconde section d'image (420) de la zone de visualisation (40) capturée par l'unité de capture (10),
dans lequel, lorsque l'unité de traction (2) et la remorque (3) sont sensiblement alignées l'une avec l'autre dans la direction longitudinale du véhicule automobile (1), l'unité de traitement (20) prend de la zone de visualisation (40) de l'au moins un capteur d'image (12) la première section d'image (410) au niveau d'une première position initiale (A) et la seconde section d'image (420) au niveau d'une seconde position initiale (B), et
dans lequel, lorsque l'unité de traction (2) et la remorque (3) sont agencées l'une par rapport à l'autre selon un angle sensiblement différent de 0°, l'unité de traitement (20) prend de la zone de visualisation (40) de l'au moins un capteur d'image (12) la première section d'image (410) au niveau d'une première position modifiée (A') et/ou la seconde section d'image (420) au niveau d'une seconde position modifiée, et
dans lequel la résolution de la première section d'image (410) au niveau de la position initiale (A) et au niveau de la position modifiée (A') sur l'unité de restitution (30) est plus grande que la résolution de la seconde section d'image (420) au niveau de la position initiale (B) et au niveau de la position modifiée sur l'unité de restitution (30), dans lequel l'unité de capture d'image (10) présente une seule caméra (11), dans lequel la seule caméra (11) présente un seul capteur d'image (12).

2. Système de visualisation (100, 200) selon la revendication 1, dans lequel la première section d'image (410) contient un champ de visualisation principal et/ou la seconde section d'image (420) contient un champ de visualisation de grand angle, dans lequel le champ de visualisation principal contient de préférence un premier champ de visualisation (411) prescrit par la loi et/ou le champ de visualisation de grand angle contient un second champ de visualisation (421) prescrit par la loi.

3. Système de visualisation (100, 200) selon l'une quelconque des revendications précédentes, dans lequel la première section d'image (410) est positionnée sur la zone de visualisation (40) du capteur d'image (12) et orientée de sorte qu'elle reproduit au niveau de la première position initiale (A) une partie de l'unité de traction (2), et/ou dans lequel la première section d'image (410) au niveau de la position initiale (A) et la première section d'image (410) au niveau de la position modifiée (A') présente un point de référence (P) de la remorque, dans lequel le point de référence (P) se trouve de préférence à l'intérieur de la première section d'image (410) au niveau de la première position initiale (A) et au niveau de la première position modifiée (A') au même endroit de la première section d'image (410).

4. Système de visualisation (100, 200) selon l'une quelconque des revendications précédentes, dans lequel la première section d'image (410) et la seconde section d'image (420) se coupent en partie sur le capteur d'image (12).

5. Système de visualisation (100, 200) selon l'une quelconque des revendications précédentes, dans lequel l'unité de restitution (30) présente une première zone d'affichage définie (31) pour la restitution de la première section d'image (410) au niveau de la première position initiale (A) et une seconde zone d'affichage définie (32) pour la restitution de la seconde section d'image (420) au niveau de la seconde position initiale (B), dans lequel le rapport de la grandeur de la première zone d'affichage définie (31) par rapport à la grandeur de la seconde zone d'affichage définie (32) est de préférence invariable.

6. Système de visualisation (100, 200) selon l'une quelconque des revendications précédentes, dans lequel la zone, qui est reproduite par la première section d'image (410) et/ou la seconde section d'image (420) au niveau de la position modifiée (A'), est agencée plus près de ou plus loin de l'unité de traction (2) que la zone, qui est reproduite par la première section d'image (410) et/ou la seconde section d'image (420) au niveau de la position initiale (A, B).

7. Système de visualisation (100, 200) selon la revendication 5 ou 6, dans lequel la grandeur de la première section d'image (410) et/ou la grandeur de la seconde section d'image (420) au niveau de la position modifiée (A') est égale à la grandeur de la première section d'image (410) et/ou à la grandeur de la seconde section d'image (420) au niveau de la position initiale (A, B).

8. Système de visualisation (100, 200) selon la revendication 6, dans lequel le rapport latéral de la première section d'image (410) et/ou le rapport latéral de la seconde section d'image (420) au niveau de la position modifiée (A') est égal au rapport latéral de la première section d'image (410) et/ou au rapport latéral de la seconde section d'image (420) au niveau de la position initiale (A, B).

9. Système de visualisation (100, 200) selon la revendication 5, dans lequel la première zone d'affichage (31) est adaptée pour restituer la première section d'image (410) en même temps à la position initiale et à la position modifiée, et la seconde zone d'affichage (32) est adaptée pour restituer la seconde section d'image (420), dans lequel la première section d'image (410) présente au niveau de la position initiale de préférence une mise à l'échelle modifiée dans la direction horizontal vertical par rapport à l'axe longitudinal de véhicule que la première section d'image (410) au niveau de la position modifiée.

10. Système de visualisation (100, 200) selon l'une quelconque des revendications précédentes, dans lequel l'unité de traitement (20) est adaptée pour recevoir des signaux pour la description du rapport d'angle entre l'unité de traction (2) et la remorque (3) d'un dispositif de signalisation monté sur le véhicule (1) et pour prendre ou pas la première section d'image (410) et/ou la seconde section d'image (420) sur la base du signal de commande au niveau de la première et/ou seconde position modifiée, dans lequel le dispositif de signalisation est adapté de préférence pour la génération d'un signal de commande manuel, et/ou dans lequel le dispositif de signalisation contient un capteur de véhicule, qui est adapté pour la génération du signal de commande.

11. Système de visualisation (100, 200) selon l'une quelconque des revendications précédentes, dans lequel l'unité de traitement (20) adapte la première et seconde section d'image (410, 420) au niveau de la première ou seconde position modifiée (A') sur la base du signal de commande en continu à la situation de fonctionnement du véhicule (1).

12. Système de visualisation (100, 200) selon la revendication 11, dans lequel la situation de fonctionnement est une conduite en virage.

13. Agencement de système de visualisation avec deux systèmes de visualisation (100L, 100R) selon l'une quelconque des revendications 1 à 12, dans lequel des unités de traitement (20) des deux systèmes de visualisation (100L, 100R) sont adaptées pour échanger des données.

14. Système de remplacement de rétroviseur pour un véhicule avec un système de visualisation (100, 200) selon l'une quelconque des revendications 1 à 12 ou avec un agencement de système de visualisation selon la revendication 13.
